# EUROPEAN PATENT SPECIFICATION

(11) **EP 2 772 286 B1**
(45) Date of publication and mention of the grant of the patent: **24.05.2017**
(21) Application number: 14156166.2
(22) Date of filing: 21.02.2014
(51) Int. Cl.: A63B 69/16, A63B 22/18, G09B 9/00, A63B 22/06

(54) **Measuring device and measuring kit using said device**
MESSGERÄT UND MESS-KIT DAFÜR
APPAREIL DE MESURE ET KIT DE MESURE L'UTILISANT

(30) Priority: 28.02.2013 IT MI20130304
(43) Date of publication of application: 03.09.2014
(73) Proprietor: Studio A.I.P. S.R.L., 21040 Oggiona con Santo Stefano (VA) (IT)
(72) Inventor: Brivio, Marco, I-21040 OGGIONA CON SANTO STEFANO (VA) (IT); Brivio, Paolo, I-21040 OGGIONA CON SANTO STEFANO (VA) (IT); Ferraroli, Alessandro, I-21030 CUGLIATE FABIASCO (VA) (IT)
(74) Representative: Ponzellini, Gianmarco

(56) References cited:
- EP-A1- 1 214 957
- EP-A2- 0 354 785
- WO-A1-2007/083341
- WO-A2-2011/002302
- US-A- 5 050 865
- US-A1- 2008 058 170

## Description

### FIELD OF THE INVENTION

The present invention relates to a measuring device and a measuring kit using the device. The device and the kit are advantageously applicable in the sporting field, in particular in the cycling field. For example, the device and kit are used for performance tests (for example for the determination of the anaerobic threshold) or posture tests of a cyclist.

### PRIOR ART

As is known, in the sporting field wide use is made of ergometers and/or exercise bicycles, used for training and/or for performance tests of a sportsperson, in particular a cyclist.

Exercise bicycles are known which enable the cyclist to simulate a pedal stroke and, with the aid of special instrumentation (milometer, exertion indicators, mean and maximum velocity, exertion resistance tapers and cardio-frequency meters) simulate training and/or measure some athletic conditions (for example the degree of exertion and the heartbeat).

A first type of exercise bicycle of known type is constituted by a single rigid frame which has the aim of defining the ground-rest structure and further simulate the structure of a bicycle: the single rigid frame stably bears a pair of pedals, a saddle and a handlebar.

These exercise bicycles are provided with a control unit which monitors the pedal stroke and/or the condition of the cyclist, and provide the user, via a display connected to the control unit, with a series of data that can help him or her to monitor his or her physical exertion with the aims of improving their performance (as described above, the data can relate to the cyclist's training and/or particular conditions of correct or incorrect posture thereof).

Obviously, these apparatus must be able to guarantee use for various and different cyclists: for this reason they exhibit at least a position-adjustable saddle for enabling a partial adaptation of the frame to the cyclist.

The type of exercise bicycle described above exhibits numerous limitations and disadvantages. A first limitation is connected to the structure of the support body: the realization of the body in a single frame is extremely limiting as in general there is a need to be able to realize an instrument able to simulate the ideal posture of each user (cyclist) individually and optimally.

In fact, even if the support body is designed to simulate a bicycle frame, it can in no way be adapted optimally to the physiology of each user: the frame is the same for each cyclist and therefore cannot necessarily be optimised for an analysis of the posture of each cyclist. The fact of realising the exercise bicycle and/or the ergometer in a single and compact body, assembled with a control and display unit, makes the device extremely rigid in use: this limitation does not enable correctly simulating the normal motion of the bicycle and the pedal stroke of the user in the use condition on a flat and/or inclined road. This last condition is extremely disadvantageous in both the monitoring and the training step and in the step of verifying the posture/adjustment of the cyclist's bicycle.

If the sport is played at high levels, such as in competitions, it is of particular importance to perform accurate tests on the cyclist in order both to achieve a correct adjustment of the bicycle and for medical-diagnostic aims in order to have a general picture of the cyclist's condition (monitoring the cyclist for exertion levels) as well as for competitive aims in order to collect performance data (for example the maximum power that the cyclist can render and his or her resistance in various situations of exertion).

The proper adjustment of the bicycle in terms of the height of the saddle and the adjusting of the cleats on the cyclist's shoe-soles takes on considerable relevance.

For this reason, ergometers are known which exhibit a support structure predisposed to receive a frame of a real bicycle. In structural terms, these ergometers exhibit a rest base from which a first and a second constraining portion emerge, each of which engages the front and rear fork of a bicycle. The bicycle pedals are connected to a brake mechanism predisposed to simulate different use conditions of the apparatus.

Obviously, these ergometers also exhibit a control unit connected to the mechanism and predisposed to collect data relating to the pedal stroke of the cyclist in order to determine the performance thereof.

Document WO 2007/083341 discloses a road bicycle simulator, of the type comprising an elongated narrow base designed to transversally support a pair of parallel rolls on which the rear wheel of the bicycle rests, and provided in the front with means designed to support the fork of the bicycle, which are hinged to a suitable vertical bearing structure, capable of oscillating around a vertical and horizontal axis.

This solution is better than the exercise bicycles previously described as it enables the cyclist at least to use his or her own frame; this condition improves the simulation in terms of pedal stroke and posture which a consequent improvement of the detections relating to the performance of the cyclist thereon.

While these described ergometers enable good simulation of the pedal stroke of the cycle and thus enable carrying out accurate measurements, the Applicant has found that this last type of ergometers also exhibits some drawbacks and is therefore liable to improvement in various ways. In particular, the described ergometers do not enable optimal simulation of the movement of the bicycle during normal use conditions thereof (i.e. as if the bicycle were actually on the road and/or off-road): in this way the data relating to the cyclist is at least partially falsified, which also reflect, though less markedly with respect to the above-analysed examples, on problems of verification of the training and the measurements of the above-mentioned exercise bicycles.

### AIM OF THE INVENTION

The aim of the present invention is therefore substantially to obviate at least one of the drawbacks and/or limitations of the preceding solutions.

A first aim of the invention is to disclose a measuring device, according to claim 1, and a measuring kit, according to claim 11, able substantially and reliably to reproduce the various use conditions of a bicycle, in particular to reliably simulate the various use conditions of a bicycle which, on a flat road and/or on an inclination, is in reality held up in working trim by the gyroscopic effects of the two wheels, the aerodynamic forces of the air and the mass displacements of the cyclist (and not rigidly constrained to the ground as is the case with the simulations of known ergometers).

A further main aim of the invention is to provide a measuring device and a measuring kit which is extremely precise and enables very accurately detecting the power developed by the pedal stroke of a cyclist and the various movements thereof during the pedal stroke.

One or more of the above-described aims, which will more fully appear during the course of the following description are substantially attained by a measuring device and a measuring kit according to one or more of the appended claims.

### SUMMARY OF THE INVENTION

Aspects of the invention are described in the following.

A first aspect relates to a measuring device (1), in particular for monitoring a posture and/or a performance of a cyclist during pedalling, comprising:
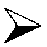 at least a support structure (2) configured such as to support a frame (3) of a bicycle (4) of a type comprising:
   ∘ at least a main body (5) extending along a prevalent development plane (A);
   ∘ at least a front fork (6) connected to the main body (5) and exhibiting an engaging portion (6a) configured such as to constrain a hub of a wheel;
   ∘ at least a rear fork (7) connected to the main body (5) and exhibiting an engaging portion (7a) configured such as to constrain a hub of a wheel;
   ∘ at least a saddle (8) connected to the main body and predisposed to enable a cyclist to sit;
   ∘ at least a handlebar (9) connected to the main body (5) and to the front fork (6), the handlebar (9) being configured to enable the cyclist to move the front fork (6) and consequently adjust the manoeuvrability of the bicycle (4);
   ∘ a first and a second pedal (10; 11) connected to the main body (5) and configured to enable, following application of a torque force thereon, rotation of a wheel connected to the rear fork (7);
said support structure (2) comprising:
∘ at least a base (2a) adapted to enable the support structure (2) to lean on a ground surface;
∘ at least a first constraining portion (12) connected to the base (2a) and exhibiting an engaging portion (12a) able to connect to the engaging portion (6a) of the front fork (6) of a bicycle (4);
∘ at least a second constraining portion (13) connected to the base (2a) and exhibiting an engaging portion (13a) able to connect to the engaging portion (7a) of the rear fork (7) of a bicycle (4);
∘ at least a mechanism (14) predisposed to receive the torque transmitted on the first and second pedal (10, 11);
∘ at least a power sensor (15) connected to the mechanism (14) and configured such as to generate a signal relating at least to the torque reaching said mechanism (14) and transmitted from said first and second pedal (10, 11);
∘ at least a control unit (16) connected to the power sensor (15) and configured such as:
   ∘ to receive the signal from the first sensor (15);
   ∘ to process the signal to enable to define at least the power dispensed by the pedalling of the cyclist.

The first constraining portion 12) of the support structure (2) comprises at least a connecting element (17) engaged to the base (2a) and configured such as to define, between the base and the first constraining portion (12), a hinge-type constraint, and wherein the second constraining portion (13) of the support structure (2) comprises at least a connecting element (18) engaged to the fixed body (2a) and configured such as to define between the support structure (2) and the second constraining portion (13) a hinge-type constraint.

In a 2nd aspect according to the 1st aspect, the connecting element (17) of the first constraining portion (12) comprises at least a spherical joint (19) predisposed to enable at least a partial oscillation of the first constraining portion (12) about a first axis (L1) parallel to the prevalent development plane (A) of the bicycle (4), in particular said first axis (L1) extending, in use conditions of the device (1), along a substantially horizontal direction.

In a 3rd aspect according to the 2nd aspect, the spherical joint (19) of the first constraining portion (12) is predisposed such as to enable at least a partial oscillation of the first constraining portion (12) about a second axis (L2) transversal, in particular perpendicular, to the prevalent development plane (A) of the bicycle (4).

In a 4th aspect according to the 2nd or 3rd aspect, the spherical joint (19) of the first constraining portion (12) is predisposed to enable at least a partial oscillation of the first constraining portion (12) about a third axis (L3) parallel to the prevalent development plane (A) of the bicycle (4) and transversal, in particular perpendicular, to the first axis (L1).

In a 5th aspect, according to the preceding aspect, the third axis (L3) extending, in use conditions of the device (1), along a substantially vertical direction.

In a 6th aspect, according to any one of aspects from 1 to 5, the connecting element (18) of the second constraining portion (13) comprises at least a spherical joint (20) predisposed to enable at least a partial oscillation of the second constraining portion (13) about a fourth axis (L4) parallel to the prevalent development plane (A) of the bicycle (4), in particular said fourth axis (L4) extending, in use conditions of the device (1), along a substantially horizontal direction.

In a 7th aspect according to the 6th aspect, the spherical joint (20) of the second constraining portion (13) is predisposed to enable at least a partial oscillation thereof about a fifth axis (L5) transversal, in particular perpendicular, to the prevalent development plane (A), of the bicycle (4).

In an 8th aspect according to aspects 6 or 7, spherical joint (20) of the second constraining portion (13) is predisposed to enable at least partial oscillation of the second constraining portion (13) about a sixth axis (L6) parallel to the prevalent development plane (A) of the bicycle (4) and transversal, in particular perpendicular, to the fourth axis (L4).

In a 9th aspect according to the 8th aspect, sixth axis (L6) extends, in use conditions of the device (1), along a substantially vertical direction.

In a 10th aspect according to any one of aspects from 6 to 9, the first axis (L1) and the fourth axis (L4) are substantially parallel to one another.

In an 11th aspect according to any one of aspects from 7 to 10, the second axis (L2) and the fifth axis (L5) are substantially parallel to one another.

In a 12th aspect according to any one of aspects from 8 to 11, the third axis (L3) and the sixth axis (L6) are substantially parallel to one another.

In a 13th aspect according to any one of aspects from 8 to 12, the first, second and third axis (L1, L2, L3) define a triad of transversal axes, in particular perpendicular to one another, and wherein the fourth, fifth and sixth axes (L4, L5, L6) define a triad of transversal axes.

In a 14th aspect according to any one of the preceding aspects, the device comprises at least a first reaction element (26) connected at a side to the first constraining portion (12) and at another side to the base (2a) of the support structure (2), said first reaction element (26) being configured such as to define an equilibrium condition of the first constraining portion (12) enabling the first reaction element (26) a predetermined oscillation about the first axis (L1); said device (1) further comprises a second reaction element (27) connected at a side to the first constraining portion (12) and at another side to the base (2a) of the support structure (2), the second reaction element (27) being configured such as to define a further condition of equilibrium of the first constraining portion (12) enabling the second reaction element (27) a predetermined oscillation about the second axis (L2), and wherein the device (1) further comprises a third reaction element (30) connected at a side to the first constraining portion (12) and at another side to the base (2a) of the support structure (2), the third reaction element (30) being configured such as to define a further condition of equilibrium of the first constraining portion (12) enabling the third reaction element (30) a predetermined oscillation about the third axis (L3) thereof.

In a 15th aspect according to any one of the preceding aspects, the device comprises a fourth reaction element (28) connected at a side to the second constraining portion (13) and at another side to the base (2a) of the support structure (2), the fourth element (28) being configured such as to define a condition of equilibrium of the second constraining portion (13) enabling the fourth reaction element a predetermined oscillation about the fourth axis (L4) thereof; the device (1) further comprises a fifth reaction element (29) connected at a side to the second constraining portion (13) and at another side to the base (2a) of the support structure (2), the fifth reaction element (29) being configured such as to define a further condition of equilibrium of the second constraining portion (13) enabling the fifth reaction element (29) a predetermined oscillation about the fifth axis (L5), and wherein the device (1) further comprises a sixth reaction element (43) connected at a side to the second constraining portion (13) and at another side to the base (2a) of the support structure (2), the sixth reaction element (43) being configured such as to define a further condition of equilibrium of the second constraining portion (13) enabling the sixth reaction element a predetermined oscillation about the fifth axis (L6) thereof

In a 16h aspect according to any one of the preceding aspects, the first constraining portion (12) comprises at least an engaging portion (21) substantially opposite the engaging portion (12a) with respect to the first constraining portion (12), the connecting element (17) of the first constraining portion (12) being interposed between the engaging portion (21) and the engaging portion (12a), and wherein the second constraining portion (13) comprises at least an engaging portion (24) substantially opposite the engaging portion (13a) with respect to the second constraining portion (13), the connecting element (18) of the second constraining portion (13) being interposed between the engaging portion (24) and the engaging portion (13a).

In a 17th aspect according to the preceding aspect, the first and the second reaction element (26, 27) are connected at a side to the engaging portion (21) of the first constraining portion (12) and on another side to the base (2a), and wherein the third and the fourth reaction element (28, 29) are connected at a side to the engaging portion (24) of the second constraining portion (13) and on another side to the base (2a), and wherein the fifth reaction element (30) is associated substantially at the first connecting element (17) of the first constraining portion (12), in particular interposed between the first connecting element (17) of the first constraining portion (12) and the base (2a).

In an 18th aspect according to any one of aspects from 15 to 17, the device comprises at least a roll sensor (22) associated to each of said first and fourth reaction element (26; 28) and configured such as to generate a respective control signal relative to one or more stresses acting on the reaction element, the control unit (16) being connected to the roll sensors (22) and configured for:
receiving the control signal from the roll sensors (22);
processing the control signal of each of the sensors (22) in order to enable calculating, at each of the reaction elements (26; 28), at least a load directed along a lateral direction (Y) transversal, in particular perpendicular, to the prevalent development plane (A) of the frame (3).

In a 19th aspect according to any one of aspects from 15 to 18, the device comprises at least a pitch sensor (23) associated to each of said second and fourth reaction element (27; 29) and configured such as to generate a respective control signal relative to one or more forces acting on the reaction element, the control unit (16) being connected to the pitch sensors (23) and configured for:
receiving the control signal from the pitch sensors (23);
processing the control signal of each of the sensors (23) in order to enable determination, at each of the reaction elements (27; 29), of at least a load directed along a longitudinal direction (X) parallel to the prevalent development plane (A) of the frame (3), in particular, in use conditions of the device (1) the longitudinal direction being substantially horizontal.

In a 20th aspect according to any one of aspects from 14 to 19, the device comprises at least a yaw sensor (25) associated to the fifth reaction element (30) and configured such as to generate a respective control signal relative to one or more forces acting on the reaction element, the control unit (16) being connected to the yaw sensor (25) and configured for:
receiving the control signal from said yaw sensors (25);
processing the control signal of said sensor (25) to enable calculation, at said first reaction element (30), of at least a load directed along a lateral direction transversal to the prevalent development plane (A) of the frame (3).

In a 21st aspect according to any one of the preceding aspects, the first sensor (15) comprises at least a torsion cell arranged at the engaging portion (13a) of the second constraining portion (13) or substantially at the connecting element (18) thereof.

In a 22nd aspect according to aspects 20 or 21, each of the roll, pitch, and yaw sensors comprises at least one selected from a group of the following components: a torque load cell, a shear load cell, a rotation sensor, a displacement sensor, a traction-compression load cell.

In a 23rd aspect according to any one of aspects from 15 to 22, each of the reaction elements (26; 27; 28; 29; 30) comprises at least a shock absorber, in particular comprises at least a spring and/or an elastomer.

In a 24th aspect according to any one of the preceding aspects, the device defines an operating condition in which the front and rear fork (6, 7) are engaged respectively to the first and second constraining portion (12, 13) of the support structure (2), and where at least one from between the first and second constraining portion (12, 13) is configured such as to define, in cooperation with the fixed body (2a), a setting condition in which it is mobile nearingly and/or distancingly with respect to the other of the first and second constraining portion (12, 13) so as to enable defining a plurality of operating conditions and consequently dimensionally adapting the device (1) to various frames (3) of bicycles (4).

In a 25th aspect according to the preceding aspects at least one from between the first and second constraining portion (12, 13) comprises at least a mobile element (31) engaged with at least a guide (32) of the fixed body (2a), the mobile element (31), during the setting condition, being configured so as to slide relatively to the guide (32), consequently with respect to the base (2a), and determines the nearing or distancing of the constraining portions (12, 13).

A 26th aspect relates to a measuring kit (100), in particular for monitoring a posture of a cyclist during pedalling, comprising:
at least a measuring device (1) according to any one of the preceding claims;
at least a bicycle (4) having a frame (3) exhibiting:
   at least a main body (5) extending along a prevalent development plane (A);
   at least a front fork (6) connected to the main body (5) and exhibiting an engaging portion (6a) connected to the engaging portion (12a) of the first constraining portion (12);
   at least a rear fork (7) connected to the main body (5) and exhibiting an engaging portion (7a) connected to the engaging portion (13a) of the second constraining portion (13);
   at least a saddle (8) connected to the main body and predisposed to enable a cyclist to sit;
   at least a handlebar (9) connected to the main body (5) and to the front fork (6);
   a first and a second pedal (10; 11) connected to the main body (5) and configured such as to enable, following a pedal stroke of a cyclist, a developing of a predetermined torque;
   at least a detecting device (101) connected to the control unit (16) and configured to scan a cyclist and generate a measuring signal relating at least to anthropometric parameters of the cyclist;
   sais control unit (16) being predisposed for:
      receiving a measuring signal from the detecting device (101);
      processing the measuring signal such as to enable determining at least a predetermined position of the saddle (8) and the handlebar (9) defining an ideal posture for the detected cyclist.

In a 27th aspect according to the preceding aspect, the bicycle (4) is configured so as to enable at least following regulations:
the position of a first and second pedal (10; 11);
the position of the saddle (8);
the position of the handlebar (9).

In a 28th aspect according to the preceding aspect, the kit (100) comprises at least an actuating device (102) connected to the first and second pedal (10, 11), the saddle (8) and the handlebar (9), said actuating device (102) being configured such as to move the pedals (10, 11), the saddle (8) and the handlebar (9) and enable positioning thereof.

In a 29th aspect according to the preceding aspect, the actuating device (102) is further connected to the control unit (16) which, following receiving by the detecting device (101) of the measuring signal, is configured such as to command the actuating device (102) to displace the pedals, saddle and handlebar into a predetermined position defining the ideal posture of the cyclist.

In a 30th aspect, according to any one of aspects from 26 to 29, the detecting device (101) comprises at least one selected from a group of a following devices: an optic sensor, a laser pointer.

### BRIEF DESCRIPTION OF THE DRAWINGS

Some embodiments and aspects of the invention will be described in the following with reference to the accompanying drawings, provided merely by way of non-limiting example, in which:
figure 1 is a perspective view of a measuring device in accordance with the present invention;

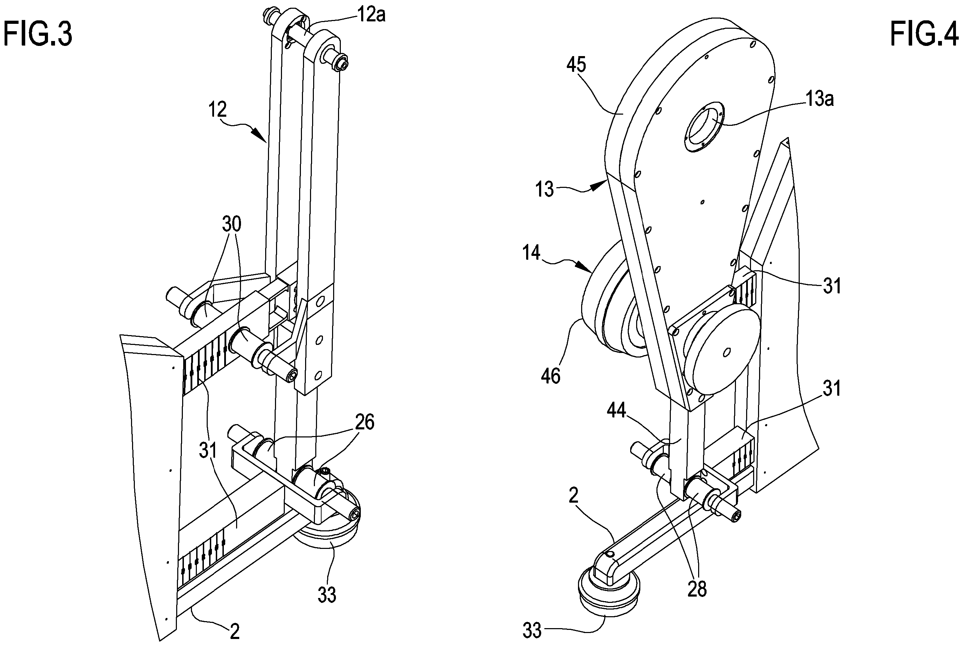

figure 2 is a detailed perspective view of a portion of the measuring device of figure 1; figure 3 and 4 are perspective views respectively of a first and second constraining portion of the measuring device in accordance with the present invention;
figure 5 is a rear view of the measuring device in accordance with the present invention; figure 6 is a longitudinal section of the measuring device in accordance with the present invention;
figure 7 is a schematic lateral view of a measuring kit in accordance with the present invention;
figures 8 and 9 are views from above of details of the measuring device;
figures 10 and 11 are views of details of the measuring device in accordance with the present invention.

### DETAILED DESCRIPTION

### Measuring device.

1 denotes in its entirety a measuring device, in particular for monitoring the posture and/or performance of a cyclist during a pedal stroke. The device 1 is advantageously applicable in the field of sport, in particular competitive sport, for carrying out performance tests (for example for determining an anaerobic threshold) or posture tests of a cyclist for determining the best possible adjustment of the bicycle so as to enable calculation of the position in which the cyclist is able to render maximum potential.

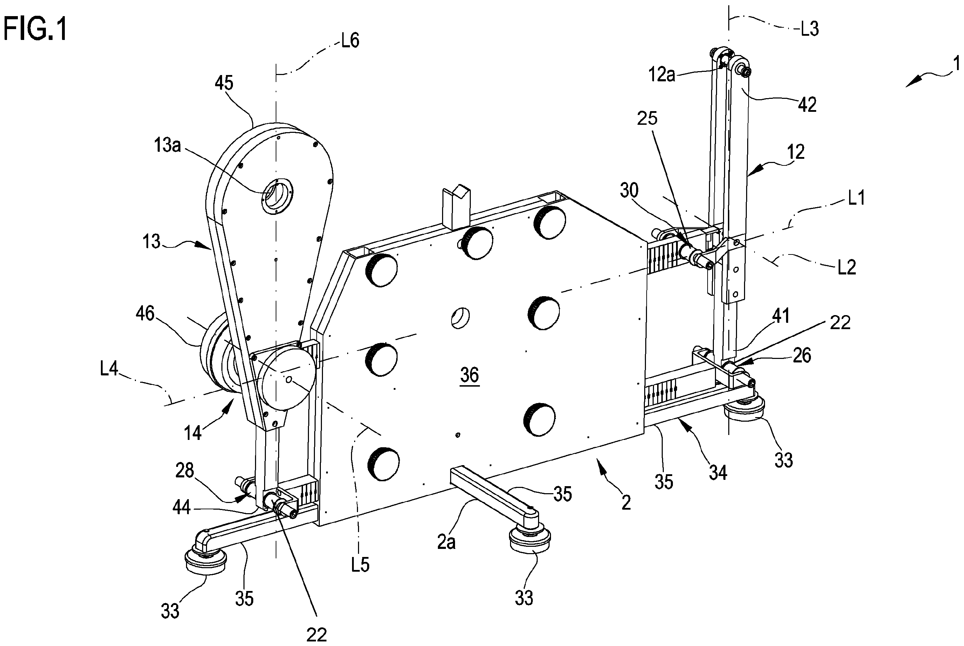

As can be seen for example from figure 1, the device 1 comprises a support structure 2 configured so as to support a real frame 3 of a bicycle 4. In greater detail, the support structure 2 comprises at least a base 2a which is configured such as to enable ground-resting of the structure 2 and consequently of the device 1.

In fact, the support structure 2 must enable a stable support of the device 1 and prevent, in use conditions thereof, undesired movements or even tilting of the structure 2.

For this reason, the base 2a advantageously develops along a main development plane which, in use conditions of the device 1, is substantially horizontal (parallel to a rest plane, in particular to the ground).

In a preferred but not limiting embodiment of the invention, the base 2a includes a support frame 34 unlimitingly exhibiting four support bars 35 (i.e. at least two perpendicularly arranged relative to one another) to form a cross-shaped structure. At the ends of the cross, the base 2a exhibits support feet 33 which define the contact elements to the rest surface (ground) of the device 1: in fact, the feet are interposed between the ground and the support frame 34. Advantageously, the feet 33 are made of plastic material or rubber in order to guarantee the structure 2 a predetermined friction (grip) in relation to the ground so as to reduce or even prevent any movements of the device 1 in the use conditions thereof. The feet 33 can be independently height-adjustable to compensate for lack of flatness of the surface.

As is visible in figure 1, for example, the support structure 2 further comprises, but is not limited to, a central body 36 firmly engaged to the base 2a and emerging transversally (vertically) therefrom.

From a structural point of view, it can be observed that the main body 36 substantially exhibits a plate shape and is aligned with and in the same plane containing two bars 35 of the support frame 34 (in line with two bars of the cross).

More in detail, the central body 36 extends perpendicularly to the prevalent development plane of the support surface (extending along the vertical) on the side opposite to the feet 33.

In an embodiment thereof the central body 36 can be positioned above the support frame 34, and is solidly constrained thereto.

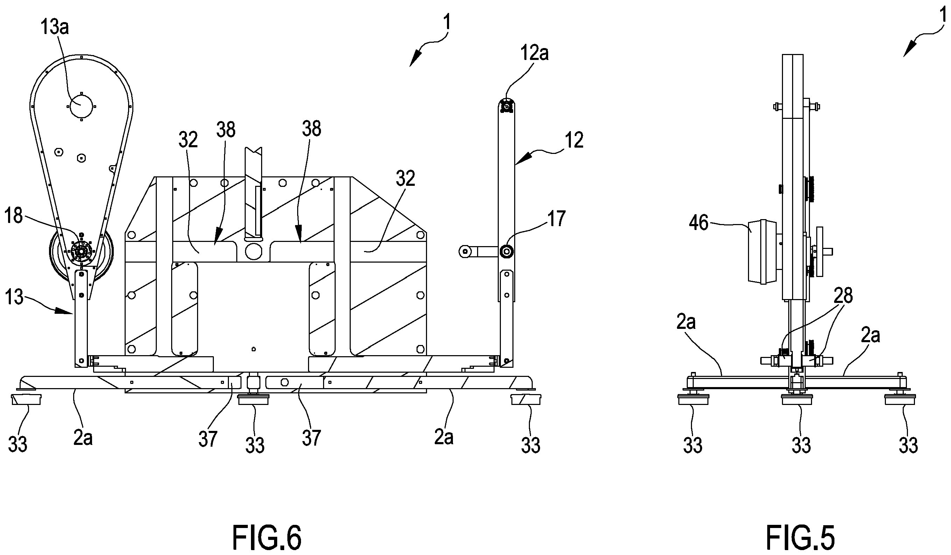

In a preferred but not limiting embodiment of the invention, the central body 36 exhibits a housing 37 able to engagingly receive at least a bar 35: in this way the central body 36 defines the blocking and guide element of the bars 35 (condition illustrated in figure 6). Each housing seat 37 can advantageously be configured so as to enable a relative sliding of the bars 35 and a blocking thereof in different operating positions: in this way the movement of the movement of the bars out of the central body 36 conformation can be regulated, thus defining an adjustable rest frame.

As visible from the accompanying figures, the central body 36 further comprises a series of engaging elements 38 configured so as to enable engagement of a first and second constraining portion 12 and 13 which are predisposed to engage respective front and rear parts of a frame 3 of a bicycle 4. The constraining portions 12 and 13 will be more fully described in the following.

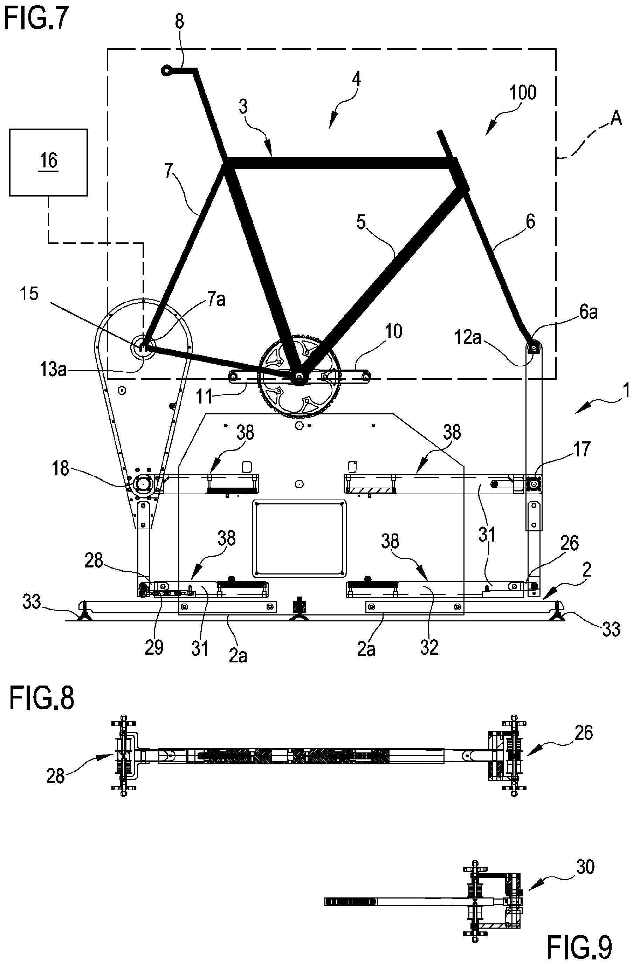

In a preferred but not limiting embodiment of the invention, each of the engaging elements 38 comprises at least a guide 32 able to receive at least a mobile element 31: each mobile element is engaged by a side thereof to the guide 32 and by the other side to a constraining portion 12, 13. As shown in the schematic representation of figure 7, each guide 32 extends along a prevalent development plane of the central body 36 and in particular is parallel to the bars 35 aligned with the body 36. In fact, in use conditions of the device 1, each guide 32 extends along a horizontal direction from a vertical edge of the body 36 in the direction of an opposite vertical edge thereof

The accompanying figures non-limitingly illustrate a central body 36 having four guides 32: two guides 32 placed on a vertical edge of the body 36 at different heights (levels) and two guides 32 located on the opposite vertical edge, which guides 32 are also positioned at different heights.

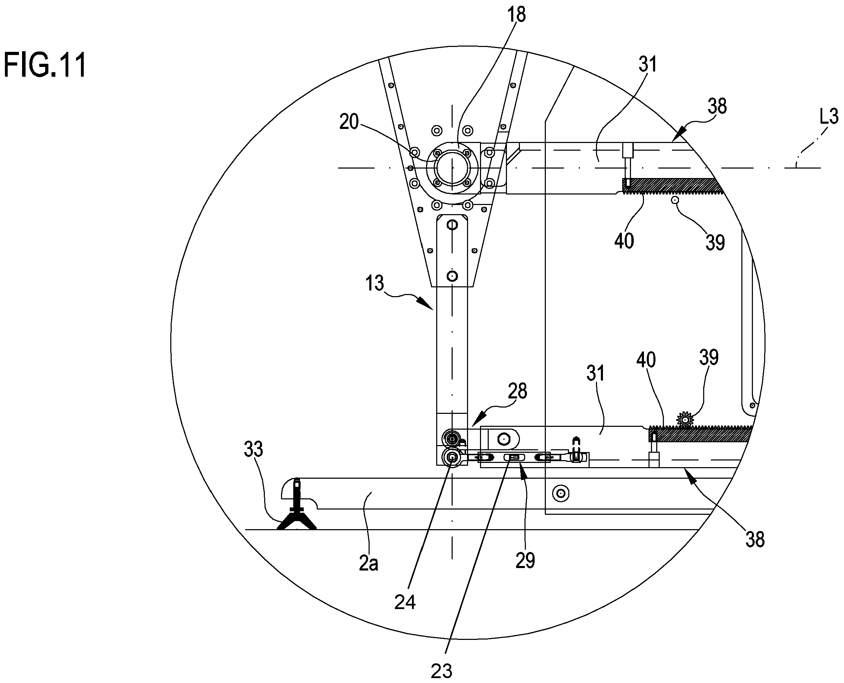

Each engaging element 38 advantageously further comprises at least an adjusting element 39 (figure 11) associated to each guide 32 and arranged so as to cooperate with a coupling portion 40 of a mobile element 31. The adjusting element 39 is configured so as to enable, in a setting condition of the device 1, the movement (sliding) of the mobile element 31 internally of the guide 32. The adjusting element 39 is also configured to enable, in a blocked condition of the device 1, the fixing of the mobile element 31 internally of the guide 32.

In this way, the engaging element 38, in particular the adjusting element 39, is predisposed such as to enable movement of the mobile elements 31 and consequently the relative movement of the constraining portions 12, 13 in order to enable the nearing or distancing thereof in relation to the central body 36.

This condition enables defining a plurality of operating conditions of the constraining portions 12, 13 and consequently enable the device 1 to be adapted to different longitudinal dimensions of a bicycle (adaptation to different types of frames 3).

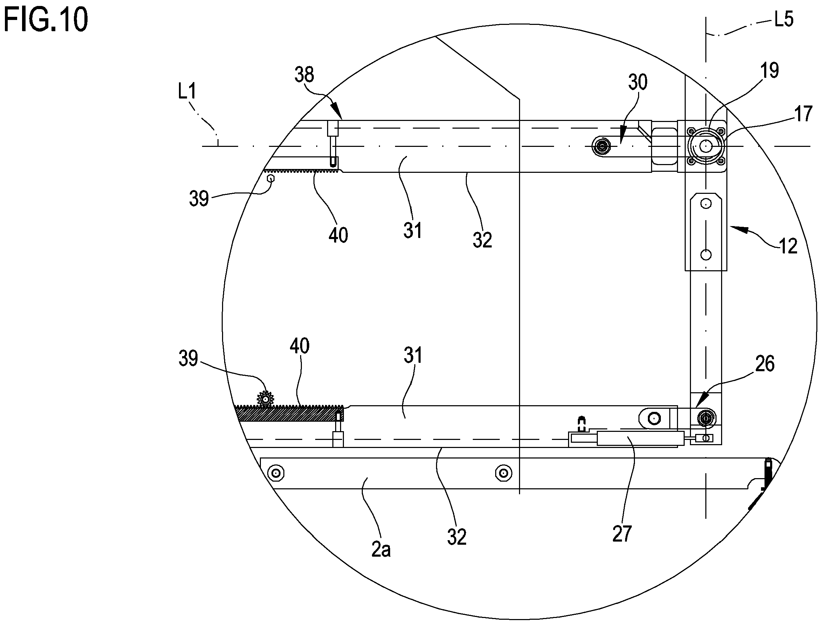

As can be seen for example in figures 10 and 11, the adjusting element 39 non-limitingly includes a crown gear adapted to cooperate with a rack of the coupling portion 40: the rotation of the crown relative sliding of the' mobile member 31 internally of the guide 32.

As previously described, the device 1 further comprises a first constraining portion 12 connected to the support structure 2, in particular to the central body 36, and configured so as to engage at least a portion of the frame 3 of a bicycle 4.

As seen for example from figures 6, 7 and 10, the first constraining portion 12 has a body extending along a direction of development prevailing between a first and a second end 41, 42.

At the first end 41, the first constraining portion 12 is engaged to one of the mobile elements 31 (lower mobile element) of the structure 2, while at the centre-line of the first constraining portion 12, the structure 2 engages the other of the mobile elements 31 (upper mobile element). In fact, in this configuration, the first constraining portion 12 defines, in cooperation with the associated mobile elements 31, an upturned F-shape: the two horizontal portions of the "F" are represented by the mobile elements 31, while the vertical portion is represented by the first constraining portion 12.

As can be seen for example in figure 1, at the second end 42, the first constraining portion 12 comprises an engaging portion 12a predisposed to connect to an engaging portion 6a of a front fork 6 of a bicycle 4.

Analyzing in greater detail the engagement condition of the first constraining portion 12 to the support structure 2, it can be noted that the constraining portion 12 comprises a connecting element 17 (figure 10) interposed between the first and second ends of the portion 12, in particular arranged at the centreline thereof, and able to define a first connection between the portion 12 and the structure 2.

More in detail, the connecting element 17 is interposed between the first constraining portion 12 and the upper mobile element 31 of the central body 36 and is configured to define between central body 36 and the constraining portion 12 a hinge-type constraint; the constraint is therefore established between the base 2a and the second portion 12.

The hinge includes, but is not limited to, a spherical hinge or a spherical joint (as illustrated in the accompanying figures).

From a structural point of view, the connecting element 17, includes, but is not limited to, a spherical joint 19 predisposed such as to enable any type of relative rotation between the portion 12 and the base 2a.

In particular, the joint 19 is predisposed so as to enable at least a partial oscillation of the first constraining portion 12 about a first axis L1 parallel to the prevalent development plane of the central body 36 (possibly contained in the plane); in particular, the first axis L1 extends, in the use conditions of the device 1, along a substantially horizontal direction. The spherical joint 19 of the first constraining portion 12 is further predisposed so as to enable at least the partial oscillation thereof about a second transversal axis L2, in particular perpendicular, to the prevalent development plane of the central body 36. The spherical joint 19 is further predisposed such as to enable at least a partial oscillation of the first constraining portion 12 about a third axis L3 parallel to the prevalent development plane of the central body 36; in particular, the third axis L3 extends, in use conditions of the device 1, along a substantially vertical direction. In fact, as can be seen for example in figure 1, the first, second and third axes L1, L2, L3 define a triad of transversal axes, in particular perpendicular, originating at the connecting element 17 of the portion 12 and consequently at the centre-line thereof.

Obviously, in this condition the front fork 6 of the bicycle 4 engaged with the first portion 12 is also free to move together with the first portion 12 and consequently rotate about the axes L1, L2 and L3.

To define a correct condition of equilibrium of the first constraining portion 12, the device 1 comprises reaction elements predisposed to constrain the movement of the portion 12 so as to enable a correct reproduction of the conditions of equilibrium of a bicycle which, on road and/or dirt, is kept in upright trim by the gyroscopic effects of the two wheels - the forces of which are unloaded to the ground, by the aerodynamic forces and displacements of the mass displacement of the rider so as to stay in balance.

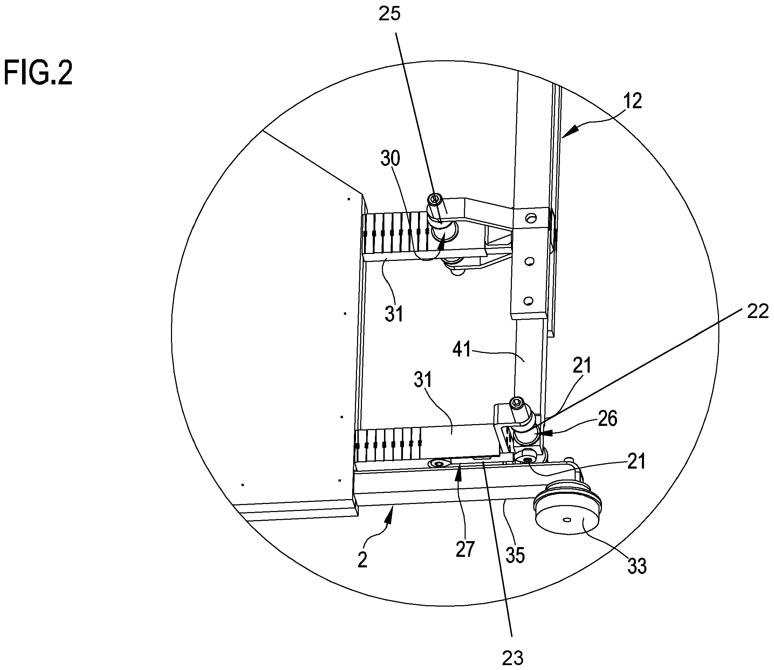

In particular, as visible from figure 2, the device 1 comprises a first reaction element 26 connected at one side to the first constraining portion 12 and at the other to the base 2a of the support structure 2; the first reaction element 26 is configured so as to define a condition of equilibrium of the first portion of the first constraining portion 12 and allow the first portion a predetermined oscillation about the first axis L1. In fact, the first reaction element 26 limits the rotation of the first constraining portion 12 about the first axis L1, allowing only a predetermined oscillation or displacement along a predetermined lateral direction Y transversal to the prevalent development plane of the central body 36.

More in detail, the first constraining portion 12 comprises at least a constraining portion 21 arranged at the first end 41 opposite the engaging portion 12a with respect to the first constraining portion 12 thereof in such a way that the connecting element 17 of the first constraining portion 12 is interposed between the engaging portion 21 and the constraining portion 12a.

The first reaction element 26 is engaged to the engaging portion 21 of the first constraining portion 12, in particular, is interposed between the engaging portion 21 and the mobile lower element 31 of the support structure 2 (figure 2).

Still observing for example figures 1 and 2, it can be noted that the device 1 also comprises a second reaction element 27 connected on one side to the first constraining portion 12 and on the other to the base 2a of the support structure 2; the second reaction element 27 is configured to define a condition of equilibrium of the first constraining portion 12 and allow the first portion a predetermined oscillation about the second axis L2. In fact, the second reaction element 27 limits the rotation of the first constraining portion 12 about the second axis L2 enabling only a predetermined oscillation or displacement along a predetermined longitudinal direction X.

The second reaction element 27 is also engaged to the engaging portion 21 of the first constraining portion 12, in particular is interposed between the engaging portion 21 and the lower mobile element 31 of the support structure 2 (figure 2).

Still looking, for example, at figures 1 and 2, it can be noted that the device 1 further comprises a third reaction element 30 connected on one side to the first constraining portion 12 and on the other to the base 2a of the support structure 2; the third reaction element 30 is configured such as to define a condition of equilibrium of the first constraining portion 12 and allow the first constraining portion a predetermined oscillation about the third axis L3. In fact, the third reaction element 30 limits the rotation of the first constraining portion 12 about the third axis L3 allowing only a predetermined oscillation or displacement along a predetermined lateral direction transversal to the prevalent development plane of the central body 36.

Unlike the first and second reaction element 26, 27, the third element 30 is engaged, non-limitingly, to the first constraining portion 12 at the centre-line of the constraining portion 12, in particular at the connecting element 17.

The first, second and third reaction element 26, 27, 30 provide a certain degree of stability to the front fork of the bicycle 4 and at the same time allow predetermined movements designed to simulate the balance of the bicycle 4 in an optimal manner.

From a structural viewpoint, the reaction elements 26, 27 and 28 include, non-limitingly, at least a shock absorber (in the accompanying figures two shock absorbers have been preferentially represented for each of the reaction elements) constituted for example by a spring and/or an elastomer.

As previously described, the device 1 also comprises a second constraining portion 13 connected to the support structure 2, in particular to the central body 36, and configured to engage at least a portion of the frame 3 of a bicycle 4.

As seen for example from figures 6, 7 and 11, the second constraining portion 13 has a body extending along a prevalent development direction between a first and a second end 44,45.

In fact, the second constraining portion 13 is opposite the first constraining portion 12 with respect to the base 2a of the support structure 2.

At the first end 44, the second constraining portion 13 is engaged to one of the mobile elements 31 (lower mobile element) of the structure 2, while at the centre-line of the second constraining portion 13, the structure 2 engages the other of the mobile elements 31 (upper mobile element). In fact, in this configuration the second constraining portion 13 defines, in cooperation with the associated mobile elements 31, an upturned F-shape: the two horizontal portions of the "F" are represented by the mobile elements 31, while the vertical portion is represented by the second portion 13.

As can be seen for example in figure 1, at the second end 45, the second constraining portion 13 comprises an engaging portion 13a predisposed to connect to an engaging portion 7a of a rear fork 7 of a bicycle 4.

Analyzing in greater detail the engagement condition of the second constraining portion 13 to the support structure 2, it can be noted that the constraining portion 13 comprises a connecting element 18 (figure 11) interposed between the first and second ends of the portion 13, in particular arranged at the centreline thereof, and able to define a first connection between the portion 13 and the structure 2.

More in detail, the connecting element 18 is interposed between the first constraining portion 13 and the upper mobile element 31 of the central body 36 and is configured so as to define between central body 36 and the constraining portion 13 a hinge-type constraint; the constraint is therefore established between the base and the second portion 13.

In structural terms, the connecting element 18 non-limitingly includes a spherical joint 20 predisposed to allow any type of relative rotation between the portion 13 and the base 2a. In particular, the joint 20 is predisposed to allow at least a partial oscillation of the second constraining portion 13 about a fourth axis L4 parallel to the prevalent development plane of the central body 36; in particular, the fourth axis L4 extends, in use conditions of the device 1, along a substantially horizontal direction. The spherical joint 20 of the second constraining portion 13 is also arranged so as to allow at least a partial oscillation of the spherical joint 20 around a fifth transversal axis L5, in particular perpendicular, to the prevalent development plane of the central body 36. The spherical joint 20 is also arranged to allow at least a partial oscillation of the second constraining portion 13 around a sixth axis L6 parallel to the prevalent development plane of the central body 36; in particular, the sixth axis L6 extends, in use conditions of the device 1, along a substantially vertical direction. In fact, as can be seen for example in figure 1, the fourth, fifth and sixth axis L4, L5, L6 define a set of three transversal axes, in particular perpendicular, all originating at the connecting element 18 of the portion 13 and consequently at the centre-line thereof.

In fact, the connecting element 18 exhibits the same structure as the connecting element 17: in this way the elements 17 and 18 define triads of axes having substantially identical origin respectively at the centreline of the first and second constraining portion 12, 13. Obviously, in this condition, the rear fork 7 of the bicycle 4 engaged with the second portion 13 is also free to move together with the second portion 13 and can consequently rotate around the axes L4, L5 and L6.

To define a correct condition of equilibrium of the second constraining portion 13, the device 1 comprises reaction elements arranged to constrain the movement of the portion 13 so as to allow a correct reproduction of the conditions of equilibrium of a bicycle which, on road and/or dirt, is kept in upright trim by the gyroscopic effects of the two wheels - the forces of which are unloaded to the ground, by the aerodynamic forces and displacements of the mass displacements of the rider so as to stay in balance.

In particular, as visible from figure 11, the device 1 comprises a fourth reaction element 28 connected at one side to the second constraining portion 13 and at the other to the base 2a of the support structure 2; the fourth reaction element 28 is configured so as to define a condition of equilibrium of the first portion of the second constraining portion 13 and allow the second constraining portion 13 a predetermined oscillation about the fourth axis L4. In fact, the fourth reaction element 28 limits the rotation of the second constraining portion 12 about the first axis L1, allowing only a predetermined oscillation or displacements along a predetermined lateral direction Y transversal to the prevalent development plane of the central body 36.

More in detail, the second constraining portion 13 comprises at least an engaging portion 24 predisposed at the first end 44 opposite the engaging portion 13a with respect to the second constraining portion 13 thereof in such a way that the connecting element 18 of the second constraining portion 13 is interposed between the engaging portion 24 and the engaging portion 13a.

The fourth reaction element 28 is engaged to the engaging portion 24 of the second constraining portion 13, in particular, is interposed between the engaging portion 24 and the mobile lower element 31 of the support structure 2 (figure 11).

Still observing for example figures 1 and 2, it can be observed that the device 1 also comprises a fifth reaction element 29 connected on one side to the second constraining portion 13 and on the other to the base 2a of the support structure 2; the fifth reaction element 29 is configured to define a condition of equilibrium of the second constraining portion 12 and allow the first portion a predetermined oscillation about the fifth axis L5. In fact, the fifth reaction element 29 limits the rotation of the second constraining portion 13 about the fifth axis L5 enabling only a predetermined oscillation or displacements along a predetermined longitudinal direction X.

The fifth reaction element 27 is also engaged to the engaging portion 24 of the second constraining portion 13, in particular is interposed between the engaging portion 21 and the lower mobile element 31 of the support structure 2 (figure 2).

In a further embodiment not illustrated in the accompanying figures, the device 1 can non-limitingly include a sixth reaction element connected on one side to the second constraining portion 13 and on the other side to the base 2a of the support structure 2; the sixth reaction element is configured so as to define a condition of equilibrium of the second constraining portion 13 and allow the second constraining portion 13 a predetermined oscillation about the sixth axis L6. In fact, the sixth reaction element limits the rotation of the second constraining portion 13 around the sixth axis L6 allowing only a predetermined oscillation or movement along a predetermined lateral direction transversal to the prevalent development plane of the central body 36.

The fourth, fifth and sixth reaction element afford the rear fork of the bicycle 4 a certain degree of stability and at the same time allow predetermined movements designed to simulate the balance of the bicycle 4 in an optimal manner.

From a structural viewpoint, the reaction elements associated with the second constraining portion 13 non-limitingly comprise at least one shock absorber (in the accompanying figures two shock absorbers have preferentially been represented for each of the reaction elements) constituted for example by a spring and/or an elastomer. As previously described, the device 1 is used to simulate the use conditions of a bicycle by a user. In order to achieve a correct simulation, the device is equipped with a mechanism 14 predisposed to receive the torque transmitted by the cyclist on the bicycle pedals 4.

The mechanism 14 comprises transmission organs predisposed to connect with a chain of a bicycle 4 and receive the motion transmitted from the pedals. The mechanism 14 advantageously further comprises at least an active element 46 connected to the transmission and able to act thereon so as to define different resistances to pedalling: in this way it is possible to simulate different use conditions of the bicycle 4.

The active element advantageously comprises at least a torsional load cell adapted to directly read the torque/power generated on the transmission (by pedalling), without friction or dispersions: this measurement is fundamental for obtaining reliable information, enabling comparisons to be made between different measurements, as accuracy and repeatability of the data are guaranteed.

The load cell is configured to define a tolerance in the measurement of the power generated by the cyclist of less than 1%, in particular less than 0.5%. It is absolutely unthinkable to achieve these tolerances in the measurement of power with the systems used on the bike and/or ergometers at present known. These apparatus use brakes which, because of their structure, are subject to overheating and deformation during use that do not enabling obtaining accurate and reliable measurements: the best declared accuracies of measurement carried out with the brakes are around 2% (and do not specify the temperature-linked stability of the measurements made with the brakes which in this case might negatively affect the accuracy, bringing it for example to around 5%).

In the accompanying figures a preferred embodiment is illustrated in which the active element 46 is arranged at the connecting element 18 (the centre-line of the second constraining portion 13) and therefore the transmission parts will have to be able to transmit the motion imparted by the pedals from the engaging portion 13a to the connecting element 18.

Alternatively, the active element 46 can be arranged at the engagement portion 13a: in this condition the transmission organs and the active element will both be arranged at the portion 13a such as to define a compact configuration of the mechanism 14 (condition not shown in the accompanying figures).

As shown in figure 7, the device 1 also comprises at least a power sensor 15 connected to the mechanism 14 and configured so as to generate a signal relating to at least a torque in arrival to the mechanism 14 and transmitted by the cyclist through the pedals. The sensor 15 is positioned, non-limitingly, at the engaging portion 13a, in particular with a hub bearing a series of pinions (gear wheels) of the mechanism 14.

The device 1 is further equipped with a control unit 16 connected with the mechanism 14 and configured to: receive the signal from sensor 15; process the signal to enable determining at least the power delivered by the pedalling of the rider. In fact, in this condition, the control unit 16 is able to monitor the pedalling of the rider in terms of performance.

With the aim of monitoring the movements of the cyclist during pedalling, the device 1 can be equipped with sensors connected to the reaction elements and able to receive the movements and/or efforts imparted thereon.

In particular, the device 1 comprises at least a roll sensor 22 associated to each of the first and fourth reaction element 26, 28 and configured to generate a respective control signal relative to one or more forces acting on the reaction element; the control unit 16 is connected to the roll sensors 22 and configured so as to: receive the control signal from the sensors 22; process the control signal of each of the sensors 22 to enable determining, at each of the reaction elements 26 and 28, at least a load directed along the lateral direction Y transversally to the prevalent development plane of the central body 36.

In this condition, the control unit 16 can monitor the oscillations imparted by the cyclist around the first and fourth axis (L1 and L4) respectively of the first and second constraining portion 12, 13.

The device 1 further comprises at least a pitch sensor 23 associated to each of the second and fifth reaction element 27, 29 and configured so as to generate a respective control signal relative to one or more forces acting on the reaction element; the control unit 16 is connected to the pitch sensors 23 and configured to: receive the control signal from the pitch sensors 23; process the control signal of each of the sensors 23 so as to enable determining, at each of the reaction elements 27 and 29, at least a load directed along the longitudinal direction X.

In this condition, the control unit 16 is able to monitor the oscillations imparted by the cyclist around the second and fifth axis (L2 and L5) respectively of the first and second constraining portion 12, 13.

The device 1 also comprises at least one yaw sensor 25 connected to at least the third reaction element 30, in particular to the third and sixth reaction element, and configured to generate a respective control signal relative to one or more forces acting on the reaction element; the control unit 16 is connected to the yaw sensor 25 and configured to: receive the control signal from the yaw sensors 25; process the control signal of the sensor 25 to enable determining, at the third reaction element 30, at least a load directed along a lateral direction.

In this condition, the control unit 16 is able to monitor the oscillations imparted by the cyclist about the third and sixth axis (L3 and L6) respectively of the first and second constraining portion 12, 13.

From a structural viewpoint, each of the sensors associated to the reaction elements can include at least one selected from the following group of the components: a strain gauge sensor, a traction-compression load cell, a torque load cell, a rotation sensor, a displacement sensor.

### Measuring Kit.

Also object of the present invention is a measuring kit 100 predisposed to monitor the posture and/or performance of a rider during pedalling. The kit 100 is advantageously applicable in the sports field, in particular at a competitive level, to realise performance tests (for example, for the determination of the anaerobic threshold) or posture testing of a rider designed to determine the optimal position of the rider to enable determining the position in which the cyclist is able to express his or her maximum power.

The kit 100 includes the device 1 described above and at least a bicycle 4 engaged to the device. The bicycle 4 exhibits a frame 3 comprising: at least a main body 5 extending along a prevalent development plane A, a front fork 6 connected to the main body 5 and having an engagement portion 6a connected to the engaging portion 12a of the first constraining portion 12, a rear fork 7 connected to the main body 5 and exhibiting an engaging portion 7a connected to the engaging portion 13a of the second constraining portion 13, a saddle 8 connected to the main body 5 and predisposed so as to enable a cyclist to sit, a handlebar 9 connected to the main body 5 and the front fork 6, a first and a second pedal 10, 11 connected to the main body 5 and configured so as to allow the pedal stroke of the rider and the transmission onto the pedals of a torque.

The bicycle 4 is configured so to enable at least the following adjustments: the position of the first and second pedal 10, 11, the position of the saddle 8 and the position of the handlebar 9. In fact, by means of the adjustment in terms of the position of these components (the pedals, the saddle and handlebar) different settings of the bicycle 4 can be obtained to suit the optimal posture of the rider.

In fact, the kit 100 can accommodate a standard bicycle, and therefore exhibit the normal constraints relative to the setting of a bicycle 4 (it is not possible to adjust the position of the pedals 10, 11). Alternatively, the kit 100 can be equipped with a prototype or programmable bicycle able to simulate the frame of a bicycle 4 without, however, having particular setting constraints, i.e. any positioning of the pedals, saddle and handlebar.

In fact, in the place of a normal bicycle, the programmable bicycle is installed on the device 1, which maintains the main characteristics of a bicycle, including the lightness and steering capability. The programmable bicycle enables, in fact, following adjustments: the attachment point of the pedal groups, the saddle position, handlebar position, length of the handlebar stem.

In both cases, the adjustments can be made manually, or the kit 100 can be equipped with an activating device 102 connected to adjustable elements (advantageously first and second pedal 10, 11, saddle 8 and handlebar 9) and configured so as to move the elements and enable the positioning thereof

In a preferred embodiment, the kit 100 further includes a detecting device 101, connected to the control unit 16 and configured to scan a cyclist and generate a measurement signal related to at least his or her anthropometric parameters.

The detection device 101 can comprise, for example an optical sensor and/or a laser pointer capable of scanning a user (cyclist).

In this condition, the control unit 16 is predisposed to receive the measurement signal from the detection device 101, process the measurement signal to enable determination of at least one predetermined position of the saddle 8, the handlebar 9 and/or the pedals (first and second pedal 10, 11) defining an ideal posture established *a priori* and possibly stored for the scanned cyclist.

In a first embodiment, the control unit 16 can determine the ideal position of the adjustable elements and, via a display, supply these positions to a user who can perform the setting manually.

In a second embodiment, the control unit 16 can use the detecting device (for example a laser pointer) to identify the points on the bicycle in which to position the adjustable elements. The user, following the measuring signal emitted by the device 101 can manually position adjusting elements in the ideal posture set by the control unit 16. In fact, the laser system enables positioning the pointer in the positions defined by the control unit 16 in such a way that, by positioning the bicycle, the saddle and the handlebar can be adjusted in a precise, known and reproducible setting.

In a third embodiment, the control unit 16 is configured to operate automatically, by means of the activating element 102, the displacement of the adjustment elements into a predetermined position defined in the control unit 16 and obtained by means of the detecting device 102.

### ADVANTAGES OF THE INVENTION

The present solution discloses a measurement device 1 and a measuring kit 100 predisposed to enable a realistic simulation of the freedom of movement/rotation of the frame of a bicycle in a working condition (during pedaling of a cyclist) enabling movements along/around the axes X (roll), Y (pitch), Y (yaw).

The analysis of the moments and the triaxial forces enables a quantification of the forces dispersed by the rider while pedalling and apply them (by adjusting the position and the point of attachment of the feet on the pedals) into the rotary and fluid motion of the thrust of the cyclist on the pedals.

The real simulation of the movements of a cyclist enables the device 1 and the 100 kit to obtain extremely precise measurements that very accurately detect the power generated by a cyclist's pedalling motion and the various movements of the cyclist during the pedalling motion.

### LEGEND

- 1: Measuring device
- 2: Support structure
- 2a: Base
- 3: Frame
- 4: Bicycle
- 5: Main body
- 6: Front fork
- 6a: engaging portion of the front
- 7: Rear fork
- 7a: engaging portion of the rear fork
- 8: Saddle
- 9: Handlebar
- 10: First pedal
- 11: Second pedal
- 12: First constraining portion
- 13: Second constraining portion
- 14: Mechanism
- 15: Power sensor
- 16: Control unit
- 17: First connecting element
- 18: Second connecting element
- 19: Spherical joint
- 20: Spherical joint
- 21: Engaging portion
- 22: Roll sensor
- 23: Pitch sensor
- 24: Engaging portion
- 25: Fourth sensor or yaw sensor
- 26: First reaction element
- 27: Second reaction element
- 28: Fourth reaction element
- 29: Fifth reaction element
- 30: Third reaction element
- 31: Mobile element
- 32: Guide
- 33: Feet
- 34: Rest frame
- 35: Support bars
- 36: Central body
- 37: Housing seating
- 38: Engaging element
- 39: Adjusting element
- 40: Coupling portion
- 41: First end of the first constraining portion 12
- 42: Second end of the first constraining portion 12
- 43: Sixth reaction element
- 44: First end of the second constraining portion 13
- 45: Second end of the second constraining portion 13
- 46: Active element
- 100: Measuring kit
- 101: Detectign device
- 102: Activating element
- A: Prevalent development plane
- L1: Axis
- L2: Axis
- L3: Axis
- L4: Axis
- L5: Axis
- L6: Axis
- X: Longitudinal direction
- Y: Lateral direction
- Z: Vertical direction

## Claims

1. A measuring device (1) for monitoring a posture and/or a performance of a cyclist during pedalling, comprising:
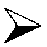 at least a support structure (2) configured such as to support a frame (3) of a bicycle (4) of a type comprising:
∘ at least a main body (5) extending along a prevalent development plane (A);
∘ at least a front fork (6) connected to the main body (5) and exhibiting an engaging portion (6a) configured such as to constrain a hub of a wheel;
∘ at least a rear fork (7) connected to the main body (5) and exhibiting an engaging portion (7a) configured such as to constrain a hub of a wheel;
∘ at least a saddle (8) connected to the main body and predisposed to enable a cyclist to sit;
∘ at least a handlebar (9) connected to the main body (5) and to the front fork (6), the handlebar (9) being configured to enable the cyclist to move the front fork (6) and consequently adjust the manoeuvrability of the bicycle (4);
∘ a first and a second pedal (10; 11) connected to the main body (5) and configured to enable, following application of a torque force thereon, rotation of a wheel connected to the rear fork (7);
said support structure (2) comprising:
∘ at least a base (2a) adapted to enable the support structure (2) to lean on a ground surface;
∘ at least a first constraining portion (12) connected to the base (2a) and exhibiting an engaging portion (12a) able to connect to the engaging portion (6a) of the front fork (6) of a bicycle (4);
∘ at least a mechanism (14) predisposed to receive the torque transmitted on the first and second pedal (10, 11);
∘ at least a power sensor (15) connected to the mechanism (14) and configured such as to generate a signal relating at least to the torque reaching said mechanism (14) and transmitted from said first and second pedal (10, 11);
∘ at least a control unit (16) connected to the power sensor (15) and configured such as:
∘ to receive the signal from the first sensor (15);
∘ to process the signal to enable to define at least the power dispensed by the pedalling of the cyclist;
wherein the first constraining portion (12) of the support structure (2) comprises at least a connecting element (17) engaged to the base (2a) and configured such as to define, between the base and the first constraining portion (12), a hinge-type constraint;
**characterised in that** the support structure (2) comprises: at least a second constraining portion (13) connected to the base (2a) and exhibiting an engaging portion (13a) able to connect to the engaging portion (7a) of the rear fork (7) of a bicycle (4); wherein the second constraining portion (13) of the support structure (2) comprises at least a connecting element (18) engaged to the fixed body (2a) and configured such as to define between the support structure (2) and the second constraining portion (13) a hinge-type constraint;
and **in that** the connecting element (17) of the first constraining portion (12) comprises a spherical joint (19) predisposed such as to enable any type of relative rotation between the portion (12) and the base (2a) and the connecting element (18) of the second constraining portion (13) comprises a spherical joint (20) predisposed to allow any type of relative rotation between the portion (13) and the base (2a).

2. The device of claim 1, wherein the spherical joint (19) of the first constraining portion (12) is predisposed to enable at least a partial oscillation of the first constraining portion (12) about a first axis (L1) parallel to the prevalent development plane (A) of the bicycle (4), in particular said first axis (L1) extending, in use conditions of the device (1), along a substantially horizontal direction, and wherein the spherical joint (19) of the first constraining portion (12) is predisposed such as to enable at least a partial oscillation of the first constraining portion (12) about a second axis (L2) transversal, in particular perpendicular, to the prevalent development plane (A) of the bicycle (4), and wherein the spherical joint (19) of the first constraining portion (12) is predisposed to enable at least a partial oscillation of the first constraining portion (12) about a third axis (L3) parallel to the prevalent development plane (A) of the bicycle (4) and transversal, in particular perpendicular, to the first axis (L1), said third axis (L3) extending, in use conditions of the device (1), along a substantially vertical direction.

3. The device of claim 1 or 2, wherein the spherical joint (20) of the second constraining portion (13) is predisposed to enable at least a partial oscillation of the second constraining portion (13) about a fourth axis (L4) parallel to the prevalent development plane (A) of the bicycle (4), in particular said fourth axis (L4) extending, in use conditions of the device (1), along a substantially horizontal direction, and wherein the spherical joint (20) of the second constraining portion (13) is predisposed to enable at least a partial oscillation thereof about a fifth axis (L5) transversal, in particular perpendicular, to the prevalent development plane (A), of the bicycle (4), and wherein the spherical joint (20) of the second constraining portion (13) is predisposed to enable at least partial oscillation of the second constraining portion (13) about a sixth axis (L6) parallel to the prevalent development plane (A) of the bicycle (4) and transversal, in particular perpendicular, to the fourth axis (L4), said sixth axis (L6) extending, in use conditions of the device (1), along a substantially vertical direction.

4. The device of any one of the preceding claims, comprising at least a first reaction element (26) connected at a side to the first constraining portion (12) and at another side to the base (2a) of the support structure (2), said first reaction element (26) being configured such as to define an equilibrium condition of the first constraining portion (12) enabling the first reaction element (26) a predetermined oscillation about the first axis (L1), said device (1) further comprises a second reaction element (27) connected at a side to the first constraining portion (12) and at another side to the base (2a) of the support structure (2), the second reaction element (27) being configured such as to define a further condition of equilibrium of the first constraining portion (12) enabling the second reaction element (27) a predetermined oscillation about the second axis (L2), and wherein the device (1) further comprises a third reaction element (30) connected at a side to the first constraining portion (12) and at another side to the base (2a) of the support structure (2), the third reaction element (30) being configured such as to define a further condition of equilibrium of the first constraining portion (12) enabling the third reaction element (30) a predetermined oscillation about the third axis (L3) thereof.

5. The device of any one of the preceding claims, wherein the device comprises a fourth reaction element (28) connected at a side to the second constraining portion (13) and at another side to the base (2a) of the support structure (2), the fourth element (28) being configured such as to define a condition of equilibrium of the second constraining portion (13) enabling the fourth reaction element a predetermined oscillation about the fourth axis (L4), the device (1) further comprises a fifth reaction element (29) connected at a side to the second constraining portion (13) and at another side to the base (2a) of the support structure (2), the fifth reaction element (29) being configured such as to define a further condition of equilibrium of the second constraining portion (13) enabling the fifth reaction element (29) a predetermined oscillation about the fifth axis (L5), and wherein the device (1) further comprises a sixth reaction element (43) connected at a side to the second constraining portion (13) and at another side to the base (2a) of the support structure (2), the sixth reaction element (43) being configured such as to define a further condition of equilibrium of the second constraining portion (13) enabling the sixth reaction element a predetermined oscillation about the sixth axis (L6).

6. The device of any one of the preceding claims, wherein the first constraining portion (12) comprises at least a further engaging portion (21) substantially opposite the engaging portion (12a) with respect to the first constraining portion (12), the connecting element (17) of the first constraining portion (12) being interposed between the further engaging portion (21) and the engaging portion (12a), and wherein the second constraining portion (13) comprises at least a further engaging portion (24) substantially opposite the engaging portion (13a) with respect to the second constraining portion (13), the connecting element (18) of the second constraining portion (13) being interposed between the further engaging portion (24) and the engaging portion (13a), and wherein the first and the second reaction element (26, 27) are connected at a side to the engaging portion (21) of the first constraining portion (12) and on another side to the base (2a), and wherein the third and the fourth reaction element (28, 29) are connected at a side to the further engaging portion (24) of the second constraining portion (13) and on another side to the base (2a), and wherein the fifth reaction element (30) is associated substantially at the first connecting element (17) of the first constraining portion (12), in particular interposed between the first connecting element (17) of the first constraining portion (12) and the base (2a).

7. The device of any one of the preceding claims comprises at least a roll sensor (22) associated to each of said first and fourth reaction element (26; 28) and configured such as to generate a respective control signal relative to one or more stresses acting on the reaction element, the control unit (16) being connected to the roll sensors (22) and configured for:
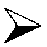 receiving the control signal from the roll sensors (22);
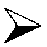 processing the control signal of each of the sensors (22) in order to enable calculating, at each of the reaction elements (26; 28), at least a load directed along a lateral direction (Y) transversal, in particular perpendicular, to the prevalent development plane (A) of the frame (3).

8. The device of any one of the preceding claims, comprising at least a pitch sensor (23) associated to each of said second and fourth reaction element (27; 29) and configured such as to generate a respective control signal relative to one or more forces acting on the reaction element, the control unit (16) being connected to the pitch sensors (23) and configured for:
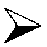 receiving the control signal from the pitch sensors (23);
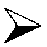 processing the control signal of each of the sensors (23) in order to enable determination, at each of the reaction elements (27; 29), of at least a load directed along a longitudinal direction (X) parallel to the prevalent development plane (A) of the frame (3), in particular, in use conditions of the device (1) the longitudinal direction being substantially horizontal.

9. The device of any one of the preceding claims, comprising at least a yaw sensor (25) associated to the fifth reaction element (30) and configured such as to generate a respective control signal relative to one or more forces acting on the reaction element, the control unit (16) being connected to the yaw sensor (25) and configured for:
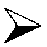 receiving the control signal from said yaw sensors (25);
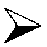 processing the control signal of said sensor (25) to enable calculation, at said first reaction element (30), of at least a load directed along a lateral direction transversal to the prevalent development plane (A) of the frame (3).

10. The device of the preceding claim, wherein the first sensor (15) comprises at least a torsion cell arranged at the engaging portion (13a) of the second constraining portion (13) or substantially at the connecting element (18) thereof.

11. A measuring kit (100), in particular for monitoring a posture of a cyclist during pedalling, comprising:
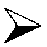 at least a measuring device (1) according to any one of the preceding claims;
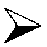 at least a bicycle (4) having a frame (3) exhibiting:
∘ at least a main body (5) extending along a prevalent development plane (A);
∘ at least a front fork (6) connected to the main body (5) and exhibiting an engaging portion (6a) connected to the engaging portion (12a) of the first constraining portion (12);
∘ at least a rear fork (7) connected to the main body (5) and exhibiting an engaging portion (7a) connected to the engaging portion (13a) of the second constraining portion (13);
∘ at least a saddle (8) connected to the main body and predisposed to enable a cyclist to sit;
∘ at least a handlebar (9) connected to the main body (5) and to the front fork (6);
∘ a first and a second pedal (10; 11) connected to the main body (5) and configured such as to enable, following a pedalling of a cyclist, a developing of a predetermined torque;
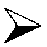 at least a detecting device (101) connected to the control unit (16) and configured to scan a cyclist and generate a measuring signal relating at least to anthropometric parameters of the cyclist;
sais control unit (16) being predisposed for:
∘ receiving a measuring signal from the detecting device (101);
∘ processing the measuring signal such as to enable determining at least a predetermined position of the saddle (8) and the handlebar (9) defining an ideal posture for the detected cyclist.

12. The kit of the preceding claim, wherein the bicycle (4) is configured such as to enable at least following regulations:
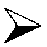 The position of a first and second pedal (10; 11);
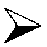 The position of the saddle (8);
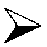 the position of the handlebar (9);
and wherein the kit (100) further comprises at least an actuating device (102) connected to the first and second pedal (10, 11), the saddle (8) and the handlebar (9), said actuating device (102) being configured such as to move the pedals (10, 11), the saddle (8) and the handlebar (9) and enable positioning thereof, and wherein said actuating device (102) is further connected to the control unit (16) which, following receiving by the detecting device (101) of the measuring signal, is configured such as to command the actuating device (102) to displace the pedals, saddle and handlebar into a predetermined position defining the ideal posture of the cyclist.

13. The kit of claim 11 or 12, wherein the detecting device (101) comprises at least one selected in a group of a following devices: an optic sensor, a laser pointer.

## Patentansprüche

1. Messvorrichtung (1) zum Überwachen einer Haltung und/oder Leistungsfähigkeit eines Radfahrers während des Pedalierens, welche aufweist:
wenigstens eine Trägerstruktur (2), die konfiguriert ist, um einen Rahmen (3) eines Fahrrads (4) eines Typs zu tragen, welcher aufweist:
∘ wenigstens einen Hauptkörper (5), der sich entlang einer prävalenten Entwicklungsebene (A) erstreckt;
∘ wenigstens eine Gabel (6), die mit dem Hauptkörper (5) verbunden ist und einen Eingriffsabschnitt (6a) aufzeigt, der konfiguriert ist, um eine Nabe eines Rads zu halten;
∘ wenigstens eine hintere Gabel (7), die mit dem Hauptkörper (5) verbunden ist und einen Eingriffsabschnitt (7a) aufzeigt, der konfiguriert ist, um eine Nabe eines Rads zu halten;
∘ wenigstens einen Sattel (8), der mit dem Hauptkörper verbunden und vorangeordnet ist, um zu ermöglichen, dass ein Radfahrer sitzt;
∘ wenigstens eine Lenkstange (9), die mit dem Hauptkörper (5) und mit der vorderen Gabel (6) verbunden ist, wobei die Lenkstange (9) konfiguriert ist, um dem Radfahrer zu ermöglichen, die vordere Gabel (6) zu bewegen und demzufolge die Manövrierbarkeit des Fahrrads (4) einzustellen;
∘ ein erstes und ein zweites Pedal (10; 11), die mit dem Hauptkörper (5) verbunden und konfiguriert sind, um, dem Anlegen einer Drehmomentkraft darauf folgend, eine Drehung eines mit der hinteren Gabel (7) verbundenen Rads zu ermöglichen;
wobei die Trägerstruktur (2) aufweist:
∘ wenigstens eine Basis (2a), die dazu ausgelegt ist, zu ermöglichen, dass sich die Trägerstruktur (2) auf einer Bodenfläche abstützt;
∘ wenigstens einen ersten Halterungsabschnitt (12), der mit der Basis (2a) verbunden ist und einen Eingriffsabschnitt (12a) aufzeigt, der mit dem Eingriffsabschnitt (6a) der vorderen Gabel (6) eines Fahrrads (4) in Eingriff bringbar ist;
∘ wenigstens einen Mechanismus (14), der vorangeordnet ist, um das auf das erste und zweite Pedal (10, 11) übertragenen Drehmoment aufzunehmen;
∘ wenigstens einen Kraftsensor (15), der mit dem Mechanismus (14) verbunden und konfiguriert ist, um ein Signal zu erzeugen, das sich wenigstens auf das Drehmoment bezieht, welches den Mechanismus (14) erreicht und von dem ersten und zweiten Pedal (10, 11) übertragen wird;
∘ wenigstens eine Steuereinheit (16), die mit dem Kraftsensor (15) verbunden und konfiguriert ist, um:
∘ das Signal von dem ersten Sensor (15) zu empfangen;
∘ das Signal zu verarbeiten, um zu ermöglichen, wenigstens die durch das Pedalieren des Radfahrers abgegebene Kraft zu definieren;
wobei der erste Halterungsabschnitt (12) der Trägerstruktur (2) wenigstens ein Verbindungselement (17) aufweist, das mit der Basis (2a) in Eingriff steht und konfiguriert ist, um zwischen der Basis und dem ersten Halterungsabschnitt (12) eine gelenkartige Halterung zu definieren;
**dadurch gekennzeichnet, dass** die Trägerstruktur (2) aufweist:
wenigstens einen zweiten Halterungsabschnitt (13), der mit der Basis (2a) verbunden ist und einen Eingriffsabschnitt (13a) aufzeigt, der mit dem Eingriffsabschnitt (7a) der hinteren Gabel (7) eines Fahrrads (4) verbindbar ist; wobei der zweite Halterungsabschnitt (13) der Trägerstruktur (2) wenigstens ein Verbindungselement (18) aufweist, das mit dem festen Körper (2a) in Eingriff steht und konfiguriert ist, um zwischen der Trägerstruktur (2) und dem zweiten Halterungsabschnitt (13) eine gelenkartige Halterung zu definieren;
und dass das Verbindungselement (17) des ersten Halterungsabschnitts (12) ein Kugelgelenk (19) aufweist, das vorangeordnet ist, um jeden Typ von Relativdrehung zwischen dem Abschnitt (12) und der Basis (2a) zu ermöglichen, und das Verbindungselement (18) des zweiten Halterungsabschnitts (13) ein Kugelgelenk (20) aufweist, das vorangeordnet ist, um jeden Typ von Relativdrehung zwischen dem Abschnitt (13) und der Basis (2a) zu erlauben.

2. Die Vorrichtung von Anspruch 1, wobei das Kugelgelenk (19) des ersten Halterungsabschnitts (12) vorangeordnet ist, um ein partielles Schwingen des ersten Halterungsabschnitts (12) um eine erste Achse (L1) parallel zu der prävalenten Entwicklungsebene (A) des Fahrrads (4) zu ermöglichen, wobei sich insbesondere die erste Achse (L1), in Gebrauchsbedingungen der Vorrichtung (1), entlang einer im Wesentlichen horizontalen Richtung erstreckt, und wobei das Kugelgelenk (19) des ersten Halterungsabschnitts (12) vorangeordnet ist, um wenigstens ein partielles Schwingen des ersten Halterungsabschnitts (12) um die zweite Achse (L2) quer, insbesondere orthogonal, zur prävalenten Entwicklungsebene (A) des Fahrrads (4) zu ermöglichen, und wobei das Kugelgelenk (19) des ersten Halterungsabschnitts (12) vorangeordnet ist, um wenigstens ein partielles Schwingen des ersten Halterungsabschnitts (12) um eine dritte Achse (L3) parallel zu der prävalenten Abwicklungsebene (A) des Fahrrads (4) und quer, insbesondere orthogonal, zur ersten Achse (L1) zu ermöglichen, wobei sich die dritte Achse (L3), in Gebrauchsbedingungen der Vorrichtung (1), entlang einer im Wesentlichen vertikalen Richtung erstreckt.

3. Die Vorrichtung von Anspruch 1 oder 2, wobei das Kugelgelenk (20) des zweiten Halterungsabschnitts (13) vorangeordnet ist, um wenigstens ein partielles Schwingen des zweiten Halterungsabschnitts (13) um eine vierte Achse (L4) parallel zur prävalenten Entwicklungsebene (A) des Fahrrads (4) zu ermöglichen, wobei sich insbesondere die vierte Achse (L4), in Gebrauchsbedingungen der Vorrichtung (1), entlang einer im Wesentlichen horizontalen Richtung erstreckt, und wobei das Kugelgelenk (20) des zweiten Halterungsabschnitts (13) vorangeordnet ist, um wenigstens ein partielles Schwingen davon um eine fünfte Achse (L5) quer, insbesondere orthogonal, zur prävalenten Entwicklungsebene (A) des Fahrrads (4) zu ermöglichen, und wobei das Kugelgelenk (20) des zweiten Halterungsabschnitts (13) vorangeordnet ist, um wenigstens ein partielles Schwingen des zweiten Halterungsabschnitts (13) um eine sechste Achse (L6) parallel zur prävalenten Entwicklungsebene (A) des Fahrrads (4) und quer, insbesondere orthogonal, zur vierten Achse (L4) zu ermöglichen, wobei sich die sechste Achse (L6), in Gebrauchsbedingungen der Vorrichtung (1), entlang einer im Wesentlichen vertikalen Richtung erstreckt.

4. Die Vorrichtung von einem der vorhergehenden Ansprüche, die wenigstens ein erstes Reaktionselement (26) aufweist, das an einer Seite mit dem ersten Halterungsabschnitt (12) und an der anderen Seite mit der Basis (2a) der Trägerstruktur (2) verbunden ist, wobei das erste Reaktionselement (26) konfiguriert ist, um einen Ausgleichszustand des ersten Halterungsabschnitts (12) zu definieren, der ein vorbestimmtes Schwingen des ersten Reaktionselements (26) um die erste Achse (L1) herum ermöglicht, wobei die Vorrichtung (6) ferner ein zweites Reaktionselement (27) aufweist, das an einer Seite mit dem ersten Halterungsabschnitt (12) und an der anderen Seite mit der Basis (2a) der Trägerstruktur (2) verbunden ist, wobei das zweite Reaktionselement (27) konfiguriert ist, um einen weiteren Ausgleichszustand des ersten Halterungsabschnitts (12) zu definieren, der ein vorbestimmtes Schwingen des zweiten Reaktionselements (27) um die zweite Achse (L2) herum ermöglicht, und wobei die Vorrichtung (1) ferner ein drittes Reaktionselement (30) aufweist, das an einer Seite mit dem ersten Halterungsabschnitt (12) und an der anderen Seite mit der Basis (2a) der Trägerstruktur (2) verbunden ist, wobei das dritte Reaktionselement (30) konfiguriert ist, um einen weiteren Ausgleichszustand des ersten Halterungsabschnitts (12) zu definieren, der ein vorbestimmtes Schwingen des dritten Reaktionselements (30) um seine dritte Achse (L3) herum ermöglicht.

5. Die Vorrichtung von einem der vorhergehenden Ansprüche, wobei die Vorrichtung ein viertes Reaktionselement (28) aufweist, das an einer Seite mit dem zweiten Halterungsabschnitt (13) und an der anderen Seite mit der Basis (2a) der Trägerstruktur (2) verbunden ist, wobei das vierte Element (28) konfiguriert ist, um einen Ausgleichszustand des zweiten Halterungsabschnitts (13) zu definieren, der ein vorbestimmtes Schwingen des vierten Reaktionselements um die vierte Achse (L4) herum ermöglicht, wobei die Vorrichtung (1) ferner ein fünftes Reaktionselement (29) aufweist, das an einer Seite mit dem zweiten Halterungsabschnitt (13) und an der anderen Seite mit der Basis (2a) der Trägerstruktur (2) verbunden ist, wobei das fünfte Reaktionselement (29) konfiguriert ist, um einen weiteren Ausgleichszustand des zweiten Halterungsabschnitts (13) zu definieren, der ein vorbestimmtes Schwingen des fünften Reaktionselements (29) um die fünfte Achse (L5) herum ermöglicht, und wobei die Vorrichtung (1) ferner ein sechstes Reaktionselement (43) aufweist, das an einer Seite mit dem zweiten Halterungsabschnitt (13) und an der anderen Seite mit der Basis (2a) der Trägerstruktur (2) verbunden ist, wobei das sechste Reaktionselement (43) konfiguriert ist, um einen weiteren Ausgleichszustand des zweiten Halterungsabschnitts (13) zu definieren, der ein vorbestimmtes Schwingen des sechsten Reaktionselements um die sechste Achse (L6) herum ermöglicht.

6. Die Vorrichtung von einem der vorhergehenden Ansprüche, wobei der erste Halterungsabschnitt (12) wenigstens einen weiteren Angriffsabschnitt (21) aufweist, der dem Eingriffsabschnitt (12a) in Bezug auf den ersten Halterungsabschnitt (12) im Wesentlichen entgegengesetzt ist, wobei das Verbindungselement (17) des ersten Halterungsabschnitts (12) zwischen dem weiteren Eingriffsabschnitt (21) und dem Eingriffsabschnitt (12a) eingefügt ist, und wobei der zweite Halterungsabschnitt (13) wenigstens einen weiteren Eingriffsabschnitt (24) aufweist, der dem Eingriffsabschnitt (13a) in Bezug auf den zweiten Halterungsabschnitt (13) im Wesentlichen entgegengesetzt ist, wobei das Verbindungselement (18) des zweiten Halterungsabschnitts (13) zwischen dem weiteren Eingriffsabschnitt (24) und dem Eingriffsabschnitt (13a) eingefügt ist, und wobei das erste und das zweite Reaktionselement (26, 27) an einer Seite mit dem Eingriffsabschnitt (21) des ersten Halterungsabschnitts (12) und an der anderen Seite mit der Basis (2a) verbunden sind, und wobei das dritte und das vierte Reaktionselement (28, 29) an einer Seite mit dem weiteren Eingriffsabschnitt (24) des zweiten Halterungsabschnitts (13) und an der anderen Seite mit der Basis (2a) verbunden sind, und wobei das fünfte Reaktionselement (30) im Wesentlichen an dem ersten Verbindungselement (17) des ersten Halterungsabschnitts (12) zugeordnet ist, insbesondere zwischen das erste Verbindungselement (17) des ersten Halterungsabschnitts (12) und die Basis (2a) eingefügt ist.

7. Die Vorrichtung von einem der vorhergehenden Ansprüche, die wenigstens einen Rollsensor (22) aufweist, der jedem des ersten und vierten Reaktionselements (26, 28) zugeordnet und konfiguriert ist, um ein jeweiliges Steuersignal in Bezug auf eine oder mehrere auf das Reaktionselement wirkende Belastungen zu erzeugen, wobei die Steuereinheit (16) mit den Rollsensoren (22) verbunden ist und konfiguriert ist zum:
- Empfangen des Steuersignals von den Rollsensoren (22);
- Verarbeiten des Steuersignals von jedem der Sensoren (22), um zu ermöglichen, an jedem der Reaktionselemente (26, 28) wenigstens eine Last zu berechnen, die entlang einer lateralen Richtung (Y) quer, insbesondere orthogonal, zur prävalenten Entwicklungsebene (A) des Rahmens (3) ausgerichtet ist.

8. Die Vorrichtung von einem der vorhergehenden Ansprüche, die wenigstens einen Nicksensor (23) aufweist, der jedem des zweiten und vierten Reaktionselements (27, 29) zugeordnet und konfiguriert ist, um ein jeweiliges Steuersignal relativ zu einer oder mehreren auf das Reaktionselement wirkenden Kräften zu erzeugen, wobei die Steuereinheit (16) mit den Nicksensoren (23) verbunden ist und konfiguriert ist zum:
- Empfangen des Steuersignals von den Nicksensoren (23);
- Verarbeiten des Steuersignals von jedem der Sensoren (23), um zu ermöglichen, dass an jedem der Reaktionselemente (27, 29) wenigstens eine Last bestimmt wird, die entlang einer Längsrichtung (X) parallel zur prävalenten Entwicklungsebene (A) des Rahmens (3) ausgerichtet ist, wobei insbesondere in Gebrauchsbedingungen der Vorrichtung (1) die Längsrichtung im Wesentlichen horizontal ist.

9. Die Vorrichtung von einem der vorhergehenden Ansprüche, die wenigstens einen Giersensor (25) aufweist, der dem fünften Reaktionselement (30) zugeordnet und konfiguriert ist, um ein jeweiliges Steuersignal relativ zu einer oder mehreren auf das Reaktionselement wirkenden Kräften zu erzeugen, wobei die Steuereinheit (16) mit dem Giersensor (25) verbunden und konfiguriert ist zum:
- Empfangen des Steuersignals von den Giersensoren (25);
- Verarbeiten des Steuersignals des Sensors (25), um zu ermöglichen, dass an dem ersten Reaktionselement (30) wenigstens eine Last berechnet wird, die entlang einer seitlichen Richtung quer zur prävalenten Entwicklungsebene (A) des Rahmens (3) ausgerichtet ist.

10. Die Vorrichtung vom vorangehenden Anspruch, wobei der erste Sensor (15) wenigstens eine Torsionszelle aufweist, die an dem Eingriffsabschnitt (13a) des zweiten Halterungsabschnitts (13) oder im Wesentlichen an dessen Verbindungselement (18) angeordnet ist.

11. Messkit (100), insbesondere zum Überwachen einer Haltung eines Radfahrers während des Pedalierens, welches aufweist:
- wenigstens eine Messvorrichtung (1) nach einem der vorhergehenden Ansprüche;
- wenigstens ein Fahrrad (4) mit einem Rahmen (3), welches aufzeigt:
∘ wenigstens einen Hauptkörper (5), der sich entlang einer prävalenten Entwicklungsebene (A) erstreckt;
∘ wenigstens eine vordere Gabel (6), die mit dem Hauptkörper (5) verbunden ist und einen Eingriffsabschnitt (6a) aufzeigt, der mit dem Eingriffsabschnitt (12a) des ersten Halterungsabschnitts (12) verbunden ist;
∘ wenigstens eine hintere Gabel (7), die mit dem Hauptkörper (5) verbunden ist und einen Eingriffsabschnitt (7a) aufzeigt, der mit dem Eingriffsabschnitt (13a) des zweiten Halterungsabschnitts (13) verbunden ist;
∘ wenigstens einen Sattel (8), der mit dem Hauptkörper verbunden und vorangeordnet ist, um zu ermöglichen, dass ein Radfahrer sitzt;
∘ wenigstens eine Lenkstange (9), die mit dem Hauptkörper (5) und mit der vorderen Gabel (6) verbunden ist;
∘ ein erstes und ein zweites Pedal (10; 11), die mit dem Hauptkörper (5) verbunden und konfiguriert sind, um, dem Pedalieren eines Radfahrers folgend, die Entwicklung eines vorbestimmten Drehmoments zu ermöglichen;
- wenigstens eine Erfassungsvorrichtung (101), die mit der Steuereinheit (16) verbunden und konfiguriert ist, um einen Radfahrer abzutasten und ein Messsignal zu erzeugen, das sich wenigstens auf anthropometrische Parameter des Radfahrers bezieht;
die Steuereinheit (16) vorangeordnet ist zum:
∘ Empfangen eines Messsignals von der Erfassungsvorrichtung (101);
∘ Verarbeiten des Messsignals, um zu ermöglichen, dass wenigstens eine vorbestimmte Position des Sattels (8) und der Lenkstange (9), die eine ideale Haltung des detektierten Radfahrers definieren, bestimmt werden.

12. Das Kit des vorangehenden Anspruchs, wobei das Fahrrad (4) konfiguriert ist, um wenigstens die folgenden Regulationen zu ermöglichen:
- die Position eines ersten und zweiten Pedals (10; 11);
- die Position des Sattels (8);
- die Position der Lenkstange (9);
und wobei das Kit (100) ferner wenigstens eine Aktivierungsvorrichtung (102) aufweist, die mit dem ersten und zweiten Pedal (10, 11), dem Sattel (8) und der Lenkstange (9) verbunden ist, wobei die Aktivierungsvorrichtung (102) konfiguriert ist, um die Pedale (10, 11), den Sattel (8) und die Lenkstange (9) zu bewegen und deren Positionierung zu erlauben, und wobei die Aktivierungsvorrichtung (102) ferner mit der Steuereinheit (16) verbunden ist, die konfiguriert ist, um, dem Empfang des Messsignals durch die Erfassungsvorrichtung (101) folgend, die Aktivierungsvorrichtung (102) anzuweisen, die Pedale, den Sattel und die Lenkstange in eine vorbestimmte Position zu verlagern, welche die ideale Haltung des Radfahrers definiert.

13. Das Kit von Anspruch 11 oder 12, wobei die Erfassungsvorrichtung (101) wenigstens eines aufweist, dass aus einer Gruppe folgender Vorrichtungen ausgewählt ist: ein optischer Sensor, ein Laserpointer.

## Revendications

1. Dispositif de mesure (1) de suivi d'une posture et/ou d'une performance d'un cycliste durant le pédalage, comprenant :
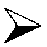 au moins une structure formant support (2) configurée afin de soutenir un cadre (3) d'une bicyclette (4) d'un type comprenant :
∘ au moins un cadre principal (5) s'étendant le long d'un plan de développement prévalent (A) ;
∘ au moins une fourche avant (6) raccordée au cadre principal (5) et faisant preuve d'une partie de mise en prise (6a) configurée afin d'être solidaire d'une plateforme d'une roue ;
∘ au moins une fourche arrière (7) raccordée au cadre principal (5) et faisant preuve d'une partie de mise en prise (7a) configurée afin d'être solidaire d'une plateforme d'une roue ;
∘ au moins une selle (8) raccordée au cadre principal et prédisposée pour permettre au cycliste de s'asseoir ;
∘ au moins un guidon (9) raccordé au cadre principal (5) et à la fourche avant (6), le guidon (9) étant configuré pour permettre au cycliste de déplacer la fourche avant (6) et en conséquence d'ajuster la manoeuvrabilité de la bicyclette (4) ;
∘ une première et une seconde pédales (10; 11) raccordées au cadre principal (5) et configurées pour permettre, suite à l'application dessus d'une force de torsion, la rotation d'une roue raccordée à la fourche arrière (7) ;
ladite structure formant support (2) comprenant :
∘ au moins une base (2a) adaptée pour permettre à la structure formant support (2) de reposer sur une surface de sol ;
∘ au moins une première partie de contrainte (12) raccordée à la base (2a) et faisant preuve d'une partie de mise en prise (12a) capable de se raccorder à la partie de mise en prise (6a) de la fourche avant (6) d'une bicyclette (4) ;
∘ au moins un mécanisme (14) prédisposé pour recevoir le torque transmis sur la première et la seconde pédales (10, 11) ;
∘ au moins un détecteur de puissance (15) raccordé au mécanisme (14) et configuré afin de générer un signal lié au moins au torque atteignant ledit mécanisme (14) et transmis depuis lesdites première et seconde pédales (10, 11) ;
∘ au moins une unité de commande (16) raccordée au détecteur de puissance (15) et configurée afin :
∘ de recevoir le signal du premier détecteur (15) ;
∘ de traiter le signal pour permettre de définir au moins la puissance dispensée par le pédalage du cycliste ;
où la première partie de contrainte (12) de la structure formant support (2) comprend au moins un élément de raccordement (17) en prise avec la base (2a) et configuré afin de définir, entre la base et la première partie de contrainte (12), une charnière;
**caractérisé en ce que** la structure formant support (2) comprend : au moins une seconde partie de contrainte (13) raccordée à la base (2a) et faisant preuve d'une partie de mise en prise (13a) capable de se raccorder à la partie de mise en prise (7a) de la fourche arrière (7) d'une bicyclette (4) ; où la seconde partie de contrainte (13) de la structure formant support (2) comprend au moins un élément de raccordement (18) en prise avec le cadre fixe (2a) et configuré afin de définir entre la structure formant support (2) et la seconde partie de contrainte (13) une charnière ;
et **en ce que** l'élément de raccordement (17) de la première partie de contrainte (12) comprend un joint sphérique (19) prédisposé afin de permettre n'importe quel type de rotation relative entre la partie (12) et la base (2a) et l'élément de raccordement (18) de la seconde partie de contrainte (13) comprend un joint sphérique (20) prédisposé pour permettre n'importe quel type de rotation relative entre la partie (13) et la base (2a).

2. Dispositif selon la revendication 1, dans lequel le joint sphérique (19) de la première partie de contrainte (12) est prédisposé pour permettre au moins une oscillation partielle de la première partie de contrainte (12) autour d'un premier axe (L1) parallèle au plan de développement prévalent (A) de la bicyclette (4), en particulier ledit premier axe(L1) s'étendant, dans les conditions d'utilisation du dispositif (1), le long d'un sens sensiblement horizontal, et où le joint sphérique (19) de la première partie de contrainte (12) est prédisposé afin de permettre au moins une oscillation partielle de la première partie de contrainte (12) autour d'un second axe (L2) transversal, en particulier perpendiculaire, au plan de développement prévalent (A) de la bicyclette (4), et où le joint sphérique (19) de la première partie de contrainte (12) est prédisposé pour permettre au moins une oscillation partielle de la première partie de contrainte (12) autour d'un troisième axe (L3) parallèle au plan de développement prévalent (A) de la bicyclette (4) et transversal, en particulier perpendiculaire, au premier axe(L1), ledit troisième axe (L3) s'étendant, dans les conditions d'utilisation du dispositif (1), le long d'un sens sensiblement vertical.

3. Dispositif selon la revendication 1 ou 2, dans lequel le joint sphérique (20) de la seconde partie de contrainte (13) est prédisposé pour permettre au moins une oscillation partielle de la seconde partie de contrainte (13) autour d'un quatrième axe (L4) parallèle au plan de développement prévalent (A) de la bicyclette (4), en particulier ledit quatrième axe (L4) s'étendant, dans les conditions d'utilisation du dispositif (1), le long d'un sens sensiblement horizontal, et où le joint sphérique (20) de la seconde partie de contrainte (13) est prédisposé pour permettre au moins son oscillation partielle autour d'un cinquième axe (L5) transversal, en particulier perpendiculaire, au plan de développement prévalent (A), de la bicyclette (4), et où le joint sphérique (20) de la seconde partie de contrainte (13) est prédisposé pour permettre au moins une oscillation partielle de la seconde partie de contrainte (13) autour d'un sixième axe (L6) parallèle au plan de développement prévalent (A) de la bicyclette (4) et transversal, en particulier perpendiculaire, au quatrième axe (L4), ledit sixième axe (L6) s'étendant, dans les conditions d'utilisation du dispositif (1), le long d'un sens sensiblement vertical.

4. Dispositif selon l'une quelconque des revendications précédentes, comprenant au moins un premier élément réactionnel (26) raccordé à un côté de la première partie de contrainte (12) et à un autre côté à la base (2a) de la structure formant support (2), ledit premier élément réactionnel (26) étant configuré afin de définir une condition d'équilibre de la première partie de contrainte (12) permettant au premier élément réactionnel (26) une oscillation prédéterminée autour du premier axe (L1), ledit dispositif (1) comprend en outre un second élément réactionnel (27) raccordé à un côté de la première partie de contrainte (12) et à un autre côté à la base (2a) de la structure formant support (2), le second élément réactionnel (27) étant configuré afin de définir une condition supplémentaire d'équilibre de la première partie de contrainte (12) permettant au second élément réactionnel (27) une oscillation prédéterminée autour du second axe (L2), et où le dispositif (1) comprend en outre un troisième élément réactionnel (30) raccordé à un côté de la première partie de contrainte (12) et à un autre côté à la base (2a) de la structure formant support (2), le troisième élément réactionnel (30) étant configuré afin de définir une condition supplémentaire d'équilibre de la première partie de contrainte (12) permettant au troisième élément réactionnel (30) une oscillation prédéterminée autour de son troisième axe (L3).

5. Dispositif selon l'une quelconque des revendications précédentes, dans lequel le dispositif comprend un quatrième élément réactionnel (28) raccordé à un côté de la seconde partie de contrainte (13) et à un autre côté à la base (2a) de la structure formant support (2), le quatrième élément (28) étant configuré afin de définir une condition d'équilibre de la seconde partie de contrainte (13) permettant au quatrième élément réactionnel une oscillation prédéterminée autour du quatrième axe (L4), le dispositif (1) comprend en outre un cinquième élément réactionnel (29) raccordé à un côté de la seconde partie de contrainte (13) et à un autre côté à la base (2a) de la structure formant support (2), le cinquième élément réactionnel (29) étant configuré afin de définir une condition supplémentaire d'équilibre de la seconde partie de contrainte (13) permettant au cinquième élément réactionnel (29) une oscillation prédéterminée autour du cinquième axe (L5), et où le dispositif (1) comprend en outre un sixième élément réactionnel (43) raccordé à un côté de la seconde partie de contrainte (13) et à un autre côté à la base (2a) de la structure formant support (2), le sixième élément réactionnel (43) étant configuré afin de définir une condition supplémentaire d'équilibre de la seconde partie de contrainte (13) permettant au sixième élément réactionnel une oscillation prédéterminée autour du sixième axe (L6).

6. Dispositif selon l'une quelconque des revendications précédentes, dans lequel la première partie de contrainte (12) comprend au moins une partie de mise en prise supplémentaire (21) sensiblement opposée à la partie de mise en prise (12a) par rapport à la première partie de contrainte (12), l'élément de raccordement (17) de la première partie de contrainte (12) étant interposé entre la partie de mise en prise supplémentaire (21) et la partie de mise en prise (12a), et où la seconde partie de contrainte (13) comprend au moins une partie de mise en prise supplémentaire (24) sensiblement opposée à la partie de mise en prise (13a) par rapport à la seconde partie de contrainte (13), l'élément de raccordement (18) de la seconde partie de contrainte (13) étant interposé entre la partie de mise en prise supplémentaire (24) et la partie de mise en prise (13a), et où le premier et le second éléments réactionnels (26, 27) sont raccordés à un côté de la partie de mise en prise (21) de la première partie de contrainte (12) et sur un autre côté à la base (2a), et où le troisième et le quatrième éléments réactionnels (28, 29) sont raccordés à un côté de la partie de mise en prise supplémentaire (24) de la seconde partie de contrainte (13) et sur un autre côté à la base (2a), et où le cinquième élément réactionnel (30) est associé sensiblement au premier élément de raccordement (17) de la première partie de contrainte (12), en particulier interposé entre le premier élément de raccordement (17) de la première partie de contrainte (12) et de la base (2a).

7. Dispositif selon l'une quelconque des revendications précédentes qui comprend au moins un détecteur cylindre (22) associé à chacun desdits premier et quatrième éléments réactionnels (26 ; 28) et configuré afin de générer un signal de commande respectif par rapport à un ou plusieurs stress agissant sur l'élément réactionnel, l'unité de commande (16) étant raccordée aux détecteurs cylindres (22) et configurée pour :
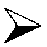 recevoir le signal de commande des détecteurs cylindres (22) ;
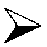 traiter le signal de commande de chacun des détecteurs (22) afin de permettre le calcul, au niveau de chacun des éléments réactionnels (26 ; 28), d'au moins une charge dirigée le long d'un sens latéral (Y) transversal, en particulier perpendiculaire, au plan de développement prévalent (A) du cadre (3).

8. Dispositif selon l'une quelconque des revendications précédentes, comprenant au moins un détecteur de pas (23) associé à chacun desdits second et quatrième éléments réactionnels (27 ; 29) et configuré afin de générer un signal de commande respectif par rapport à une ou plusieurs forces agissant sur l'élément réactionnel, l'unité de commande (16) étant raccordée aux détecteurs de pas (23) et configurée pour :
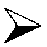 recevoir le signal de commande des détecteurs de pas (23) ;
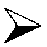 traiter le signal de commande de chacun des détecteurs (23) afin de permettre la détermination, à chacun des éléments réactionnels (27 ; 29), d'au moins une charge dirigée le long d'un sens longitudinal (X) parallèle au plan de développement prévalent (A) du cadre (3), en particulier, dans les conditions d'utilisation du dispositif (1) le sens longitudinal étant sensiblement horizontal.

9. Dispositif selon l'une quelconque des revendications précédentes, comprenant au moins un détecteur de lacet (25) associé au cinquième élément réactionnel (30) et configuré afin de générer un signal de commande respectif par rapport à une ou plusieurs forces agissant sur l'élément réactionnel, l'unité de commande (16) étant raccordée au détecteur de lacet (25) et configurée pour :
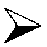 recevoir le signal de commande desdits détecteurs de lacet (25) ;
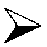 traiter le signal de commande dudit détecteur (25) pour permettre le calcul, au niveau dudit premier élément réactionnel (30), d'au moins une charge dirigée le long d'un sens latéral transversal au plan de développement prévalent (A) du cadre (3).

10. Dispositif selon la revendication précédente, dans lequel le premier détecteur (15) comprend au moins une cellule de torsion disposée à la partie de mise en prise (13a) de la seconde partie de contrainte (13) ou sensiblement au niveau de son élément de raccordement (18).

11. Trousse de mesure (100), en particulier de suivi d'une posture d'un cycliste durant le pédalage, comprenant :
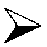 au moins un dispositif de mesure (1) selon l'une quelconque des revendications précédentes ;
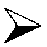 au moins une bicyclette (4) présentant un cadre (3) faisant preuve :
∘ d'au moins un cadre principal (5) s'étendant le long d'un plan de développement prévalent (A) ;
∘ d'au moins une fourche avant (6) raccordée au cadre principal (5) et faisant preuve d'une partie de mise en prise (6a) raccordée à la partie de mise en prise (12a) de la première partie de contrainte (12) ;
∘ d'au moins une fourche arrière (7) raccordée au cadre principal (5) et faisant preuve d'une partie de mise en prise (7a) raccordée à la partie de mise en prise (13a) de la seconde partie de contrainte (13) ;
∘ d'au moins une selle (8) raccordée au cadre principal et prédisposée pour permettre à un cycliste de s'asseoir ;
∘ d'au moins un guidon (9) raccordé au cadre principal (5) et à la fourche avant (6) ;
∘ d'une première et d'une seconde pédales (10 ; 11) raccordées au cadre principal (5) et configurées afin de permettre, suite au pédalage d'un cycliste, le développement d'un torque prédéterminé ;
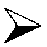 au moins un dispositif de détection (101) raccordé à l'unité de commande (16) et configuré pour scanner un cycliste et générer un signal de mesure lié au moins aux paramètres anthropométriques du cycliste ; ladite unité de commande (16) étant prédisposée pour :
∘ recevoir un signal de mesure du dispositif de détection (101) ;
∘ traiter le signal de mesure afin de permettre la détermination d'au moins une position prédéterminée de la selle (8) et du guidon (9) définissant une posture idéale pour le cycliste détecté.

12. Trousse selon la revendication précédente, dans laquelle la bicyclette (4) est configurée afin de permettre au moins les régulations suivantes :
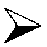 la position d'une première et d'une seconde pédales (10 ; 11) ;
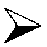 la position de la selle (8) ;
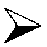 la position du guidon (9) ;
et où la trousse (100) comprend en outre au moins un dispositif d'actionnement (102) raccordé à la première et la seconde pédales (10, 11), à la selle (8) et au guidon (9), ledit dispositif d'actionnement (102) étant configuré afin de déplacer les pédales (10, 11), la selle (8) et le guidon (9) et permettre leur positionnement, et
où ledit dispositif d'actionnement (102) est en outre raccordé à l'unité de commande (16) qui, suite à la réception par le dispositif de détection (101) du signal de mesure, est configurée afin de commander au dispositif d'actionnement (102) de déplacer les pédales, la selle et le guidon dans une position prédéterminée définissant la posture idéale du cycliste.

13. Trousse selon la revendication 11 ou 12, dans laquelle le dispositif de détection (101) comprend au moins l'un sélectionné dans un groupe des dispositifs suivants : un détecteur optique, un pointeur laser.
